# EUROPEAN PATENT APPLICATION

(11) **EP 4 753 029 A1**
(43) Date of publication of application: **03.06.2026**
(21) Application number: 25219417.0
(22) Date of filing: 28.11.2025
(51) Int. Cl.: H01M 10/658, H01M 50/531

(54) **END COVER ASSEMBLY, ENERGY STORAGE APPARATUS, AND ELECTRICITY-CONSUMPTION DEVICE**

(30) Priority: 29.11.2024 CN 202411732230; 30.05.2025 CN 202510725171
(71) Applicant: Hithium Tech HK Limited, Hong Kong (HK)
(72) Inventor: QUAN, Liang, Xiamen, Fujian, 361100 (CN)
(74) Representative: Viering, Jentschura & Partner mbB Patent- und Rechtsanwälte

(57) **Abstract**

An end cover assembly (100), an energy storage apparatus (1000), and an electricity-consumption device are provided. The end cover assembly (100) includes a lower plastic member (10, 20), a connector (40, 50), and a heat insulating member (80, 90). The lower plastic member (10, 20) includes a body (11, 21) and an assembling groove (15, 25) recessed from a bottom face (112, 212) of the body (11, 21). The connector (40, 50) includes a connecting portion (41, 51), a transition portion (42, 52), and a bending portion (43. 53) connected between the connecting portion (41, 51) and the transition portion (42, 52). The connecting portion (41, 51) has an outer surface (411, 511) and an inner surface (412, 512). The transition portion (42, 52) has an inner side surface (422, 522) and an outer side surface (421, 521). The heat insulating member (80, 90) includes a side heat-insulating-member (81, 91) and an end heat-insulating-member (82, 92). The connecting portion (41, 51) is accommodated in the assembling groove (15, 25). The transition portion (42, 52) extends in a direction away from the lower plastic member (10, 20). The side heat-insulating-member (81, 91) covers the inner side surface (422, 522). The end heat-insulating-member (82, 92) covers the inner surface (412, 512).

## Description

### TECHNICAL FIELD

This disclosure relates to the field of energy storage technology, and in particular, to an end cover assembly, an energy storage apparatus, and an electricity-consumption device.

### BACKGROUND

With continuous advancement of energy storage technology, the requirements for internal structures of energy storage apparatuses are becoming higher and higher. In the existing energy storage apparatus, an electrode assembly generally adopts either a stacking type or a winding type. When the electrode assembly adopts the stacking type, tabs are led out from the electrode assembly and bent, and then welded with connectors. During the welding of the tabs and the connectors, high temperatures are likely to be generated and are transferred to the electrode assembly through the connectors, resulting in a series of defects in the electrode assembly and reducing a yield of the energy storage apparatus.

### SUMMARY

The present disclosure provides an end cover assembly, energy storage apparatus, and an electricity-consumption device, which can prevent the high temperature generated during the welding of tabs and connectors from affecting an electrode assembly and improve a yield of the energy storage apparatus.

An end cover assembly is provided in embodiments of the present disclosure. The end cover assembly includes a lower plastic member, a connector, and a heat insulating member. The lower plastic member includes a body. The body has a top face and a bottom face. The top face and the bottom face are positioned facing away from each other in a thickness direction of the body. The lower plastic member further defines an assembling groove. The assembling groove is recessed from the bottom face of the body and is positioned at an end of the lower plastic member in a length direction of the lower plastic member. The assembling groove has a groove bottom face. The groove bottom face and the bottom face have identical orientations. The connector includes a connecting portion, a transition portion, and a bending portion connected between the connecting portion and the transition portion. An extending direction of the connecting portion and an extending direction of the transition portion define an angle therebetween. The connecting portion has an outer surface and an inner surface. The inner surface and the outer surface are positioned facing away from each other in a thickness direction of the connecting portion. The transition portion has an inner side surface and an outer side surface. The inner side surface and the outer side surface are positioned facing away from each other in a thickness direction of the transition portion. The outer side surface has a welding region. The heat insulating member includes a side heat-insulating-member and an end heat-insulating-member. The connecting portion is accommodated in the assembling groove. The transition portion extends in a direction away from the lower plastic member. The outer surface is connected to the groove bottom face. The inner surface is positioned facing away from the groove bottom face. The heat insulating member is disposed at the connector. The side heat-insulating-member covers the inner side surface. The end heat-insulating-member covers the inner surface, and an orthographic projection of the welding region is completely positioned in the side heat-insulating-member in the thickness direction of the transition portion.

In the related art, when the electrode-assembly body adopts the stacking type, tabs are led out from the electrode assembly and bent, and then welded with connectors. However, during the welding of the tabs and the connectors, high temperatures are likely to be generated and are transferred to the electrode assembly through the connectors, resulting in a series of defects in the electrode-assembly body, such as thermal shrinkage, melting-through, and damage of the separator between the positive electrode sheet and the negative electrode sheet, thereby reducing a yield of the energy storage apparatus.

In the present disclosure, the heat insulating member (i.e., high-temperature adhesive) is provided at the connector and a part of the lower plastic member connected to the connector. The heat insulating member covers the inner surface of the connecting portion of the connector and the inner side surface of the transition portion, so as to block the heat conduction from the connector towards the electrode-assembly body by means of physical isolation, thereby reducing the high temperature generated when the tab and the connector are welded, and reducing the influence of the high temperature transferred to the connector on the electrode-assembly body. That is, defects such as thermal shrinkage, melting-through, damage of the separator between the positive electrode sheet and the negative electrode sheet are avoided, direct contact between the positive electrode sheet and the negative electrode sheet is avoided, and thus a short circuit of the electrode assembly is avoided. Meanwhile, consistency of the temperatures of the connectors is ensured, thereby facilitating improving the overall service life of energy storage apparatus and increasing the yield of the energy storage apparatus. Moreover, in the length direction of the energy storage apparatus, the orthographic projection of the welding region between the connector and the tab completely falls on the side heat-insulating-member of the heat insulating member. The side heat-insulating-member can isolate the connector from the electrode-assembly body, to prevent the high temperature generated when the connector and the tab are welded from affecting the electrode assembly through the transition portion of the connector.

In an embodiment, the body is provided with a boss protruding from the bottom face of the body. The boss has a boss face positioned facing away from the bottom face. The assembling groove is recessed from the boss face, and the end heat-insulating-member covers at least part of the boss face. In this embodiment, the end heat-insulating-member covers the connecting portion of the connector and the boss face, which can prevent the high temperature of the terminal post from being transferred to the connecting portion of the connector when the battery is abused, such as overcharge or thermal runaway test, thereby preventing affecting the electrode assembly through the connecting portion of the connector. The projection of the side heat-insulating-member in the length direction of the lower plastic member at least partially falls on the protrusion side surface of the protrusion of the lower plastic member, so that the high temperature generated when the connector and the tab are welded can be fully blocked, thereby ensuring that the heat has less influence on the electrode assembly during welding.

In an embodiment, the lower plastic member is provided with a protrusion protruding from a bottom face of the lower plastic member. The protrusion is adjacent to the boss in the length direction of the lower plastic member. The protrusion has a protrusion side surface. The protrusion side surface is positioned facing towards the boss. The protrusion exceeds the boss face. In the length direction of the lower plastic member, an orthographic projection of the side heat-insulating-member towards the protrusion side surface is partially positioned on the protrusion side surface.

In an embodiment, the protrusion side surface and the boss face are connected to each other and define an angle therebetween. The end heat-insulating-member abuts against the protrusion side surface at an edge of the end heat-insulating-member positioned facing away from the transition portion.

In an embodiment, the transition portion further has two side surfaces. The two side surfaces are positioned facing away from each other in a width direction of the transition portion. Each of the two side surfaces is connected between the outer side surface and the inner side surface. The transition portion defines an anti-slip groove on at least one of the two side surfaces. The anti-slip groove extends through the outer side surface and the inner side surface. An orthographic projection of the anti-slip groove in the thickness direction of the transition portion is at least partially positioned on the side heat-insulating-member.

In an embodiment, the anti-slip groove is implemented as multiple anti-slip grooves. The multiple anti-slip grooves are distributed on each of the two side surfaces. In a length direction of the transition portion, the multiple anti-slip grooves defined on each of the two side surfaces are defined at intervals.

In an embodiment, the multiple anti-slip grooves on each of the two side surfaces are distributed at both ends of the transition portion in the length direction of the transition portion. The multiple anti-slip grooves on one of the two side surfaces and the multiple anti-slip grooves on the other of the two side surfaces are symmetrical about a central axis extending in the length direction of the transition portion.

In an embodiment, in the width direction of the transition portion, a groove depth of the anti-slip groove is greater than or equal to 0.05 mm and less than or equal to 3 mm.

In an embodiment, the transition portion further has a guide face and an end face. The guide face is connected between the inner side surface and the end face. The guide face is inclined towards the end face. The end face is positioned facing away from the connecting portion. The transition portion further defines an avoidance groove. The avoidance groove is recessed from the guide face and the inner side surface. The avoidance groove has a trapezoidal groove bottom wall connected to the guide face. An edge of the side heat-insulating-member away from the connecting portion is positioned at one side of the avoidance groove positioned facing away from the end face.

In an embodiment, the side heat-insulating-member includes a heat-insulating base layer and an adhesive layer. The heat-insulating base layer includes a first heat-insulating section and a second heat-insulating section connected to the first heat-insulating section. The first heat-insulating section and the second heat-insulating section are distributed in a length direction of the side heat-insulating-member. The adhesive layer is completely stacked on a surface of the first heat-insulating section in a thickness direction of the first heat-insulating section. The second heat-insulating section is not provided with the adhesive layer. The side heat-insulating-member is connected to the transition portion. The first heat-insulating section is connected to the inner side surface through the adhesive layer. The second heat-insulating section covers a surface of the bending portion. The second heat-insulating section extends to the connecting portion and overlaps with a part of the end heat-insulating-member.

In an embodiment, the second heat-insulating section extends to the connecting portion and covers the part of the end heat-insulating-member.

In an embodiment, the side heat-insulating-member is provided with an indentation. The indentation extends in a width direction of the side heat-insulating-member. The indentation is positioned at one end of the second heat-insulating section close to the first heat-insulating section.

In an embodiment, the end heat-insulating-member is connected to the side heat-insulating-member, the end heat-insulating-member and the side heat-insulating-member overlap, and an overlapping part of the end heat-insulating-member and the side heat-insulating-member covers the bending portion; or the side heat-insulating-member further covers a part of the inner surface, and the end heat-insulating-member further covers a part of the inner side surface.

An energy storage apparatus is provided in embodiments of the present disclosure. The energy storage apparatus includes a housing, an electrode assembly, and the end cover assembly. The housing defines an opening. The electrode assembly is mounted in the housing. The electrode assembly includes an electrode-assembly body and a tab. The electrode-assembly body has a side surface and a top surface connected to the side surface. The tab is led out from the side surface and is electrically connected to the electrode-assembly body. The end cover assembly seals the opening. The bottom face is positioned facing towards the top surface. The transition portion is stacked on and is electrically connected to the tab. A welding mark between the transition portion and the tab is positioned in the welding region. The heat insulating member is positioned facing towards the electrode-assembly body at one side of the heat insulating member positioned facing away from the connector.

In an embodiment, the tab is bent and covers two side surfaces of the transition portion. When the transition portion defines multiple anti-slip grooves on each of the two side surfaces of the transition portion. In a thickness direction of the transition portion, orthographic projections of at least some of the multiple anti-slip grooves towards the tab are positioned on the tab.

An electricity-consumption device is provided in embodiments of the present disclosure. The electricity-consumption device includes the energy storage apparatus. The energy storage apparatus is configured to power the electricity-consumption device.

### BRIEF DESCRIPTION OF THE DRAWINGS

FIG. 1 is a schematic view of an application scenario of an energy storage apparatus provided in embodiments of the present disclosure.
FIG. 2 is a schematic structural view of an energy storage apparatus provided in embodiments of the present disclosure.
FIG. 3 is an exploded schematic structural view of the energy storage apparatus illustrated in FIG. 2.
FIG. 4 is a schematic structural view of an end cover of an end cover assembly in the energy storage apparatus illustrated in FIG. 3 at an angle.
FIG. 5 is a schematic structural view of a first lower plastic member of an end cover assembly in the energy storage apparatus illustrated in FIG. 3.
FIG. 6 is a schematic structural view of the first lower plastic member illustrated in FIG. 5 at another angle.
FIG. 7 is a schematic structural view of a second lower plastic member of an end cover assembly in the energy storage apparatus illustrated in FIG. 3.
FIG. 8 is a schematic structural view of the second lower plastic illustrated in FIG. 7 at another angle.
FIG. 9A is a schematic structural view of a first heat insulating member and a second heat insulating member of the energy storage apparatus illustrated in FIG. 2 of one embodiment.
FIG. 9B is a schematic structural view of a first heat insulating member and a second heat insulating member of the energy storage apparatus illustrated in FIG. 2 of another embodiment.
FIG. 10A is a schematic structural view of a first connector of the energy storage apparatus illustrated in FIG. 3 at an angle.
FIG. 10B is a schematic structural view of a first connector of the energy storage apparatus illustrated in FIG. 10A at another angle.
FIG. 11A is a schematic structural view of a second connector of the energy storage apparatus illustrated in FIG. 3 at an angle.
FIG. 11B is a schematic structural view of a second connector of the energy storage apparatus illustrated in FIG. 11A at another angle.
FIG. 12 is an exploded schematic structural view of some structures in an end cover assembly illustrated in FIG. 3.
FIG. 13 is a schematic structural view in which a first heat insulating member is connected to a first connector and a lower plastic member and an end cover, and a second heat insulating member is connected to a second connector and the lower plastic member and the end cover illustrated in FIG. 12.
FIG. 14 is an exploded schematic structural view of some structures in an end cover assembly of the energy storage apparatus illustrated in FIG. 2 of another embodiment.
FIG. 15 is a schematic structural view in which a first heat insulating member is connected to a first connector and a lower plastic member and an end cover, and a second heat insulating member is connected to a second connector and the lower plastic member and the end cover illustrated in FIG. 14.
FIG. 16 is a cross-sectional view of an assembly view of the end cover assembly illustrated in FIG. 12, an electrode assembly, and a housing.
FIG. 17 is an exploded schematic structural view of some structures in an end cover assembly of the energy storage apparatus illustrated in FIG. 2 of another embodiment.
FIG. 18 is a schematic structural view in which a first heat insulating member is connected to a first connector and a lower plastic member and an end cover, and a second heat insulating member is connected to a second connector and the lower plastic member and the end cover illustrated in FIG. 17.

### DETAILED DESCRIPTION

The following will describe technical solutions of embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

In the present disclosure, unless otherwise definitely specified and limited, terms "mount", "mutually connect", "connect", "fix" and the like should be broadly understood. For example, the terms may refer to fixed connection and may also refer to detachable connection or integration. The terms may refer to mechanical connection and may also refer to electrical connection or mutual communication. The terms may refer to direct mutual connection, may also refer to indirect connection through a medium and may refer to communication in two components or an interaction relationship of the two components, unless otherwise definitely limited.

In addition, terms "first", "second", and the like are only used for description and cannot be understood as explicitly or implicitly indicating relative importance or implicitly indicating the number of technical features referred to herein. Therefore, features restricted by terms "first", "second", and the like can explicitly or implicitly include at least one of the features.

Since energy required by people has strong temporal and spatial characteristics, in order to use energy in a reasonable manner and improve energy utilization, a medium or a device is required to store energy in the same energy form or in another energy form converted and then to release energy in a specific energy form based on requirements of future applications. As is known to all, in order to achieve the purpose of carbon neutralization, the main way to generate green electric energy at present is to develop green energy such as photovoltaic and wind power to replace fossil energy. At present, generation of green electric energy is generally dependent on photovoltaics, wind power, water potential, and the like. However, in general, wind energy, solar energy, and the like are strongly intermittent and volatile, resulting in an unstable power grid, insufficient power supply at a power consumption peak, and overmuch power supply at a power consumption valley. In addition, an unstable voltage may further damage electric power. Therefore, "curtailment of wind and photovoltaics" may occur due to insufficient power demand or insufficient power-grid admitting ability, and energy storage is required to solve these problems. That is, electric energy is stored by converting it into other forms of energy by physical or chemical means, and energy is released by converting it into electric energy when needed. In brief, energy storage is similar to a large "power bank", which stores electric energy when photovoltaics and wind energy are sufficient and releases stored electric power when needed.

Taking electrochemical energy storage as an example, an energy storage apparatus 1000 is provided in the present disclosure. The energy storage apparatus 1000 includes one group of chemical batteries. Chemical elements in the chemical batteries can be used as an energy storage medium to implement a charging/discharging process through chemical reaction or change of the energy storage medium. In brief, electric energy generated by solar energy and wind energy is stored in the chemical batteries. When the usage of external electric energy reaches a peak, the power stored in the chemical batteries is released for use, or is transferred to a place where the power is scarce for reuse.

At present, energy storage may be applied in various application scenarios, including (wind/solar) power-generation-side energy storage, grid-side energy storage, base-station-side energy storage, user-side energy storage, etc. Corresponding types of energy storage apparatuses include the following.
(1) A large-sized energy storage container applied in a grid-side energy-storage scenario. The energy storage container may serve as a high-quality active and reactive regulation power source in the grid, which can realize matching of electric energy loads in time and space, enhance the capacity for integration of renewable energy, and is of great significance in the backup of the grid system, relieving the pressure of power supply at a peak load, and peak shaving and frequency modulation.
(2) A small and medium-sized energy storage cabinet applied in a user-side industrial and commercial energy-storage scenario (banks, shopping malls, etc.). The small and medium-sized energy storage cabinet mainly operates in a "peak shaving and valley filling" mode. Based on the demand for electricity, there may be a significant price difference in electricity prices at peak and valley periods. When the user has an energy storage device, in order to reduce cost, an energy storage cabinet/box may be usually charged during an electricity-price valley period, and the electricity in the energy storage device may be usually released for use during the electricity-price peak period to save electricity cost.

It may be noted that the above-described devices, such as the energy storage container, the small and medium-sized energy storage cabinet, and the small household energy storage container, including the energy storage apparatus 1000 can be understood as electricity-consumption devices.

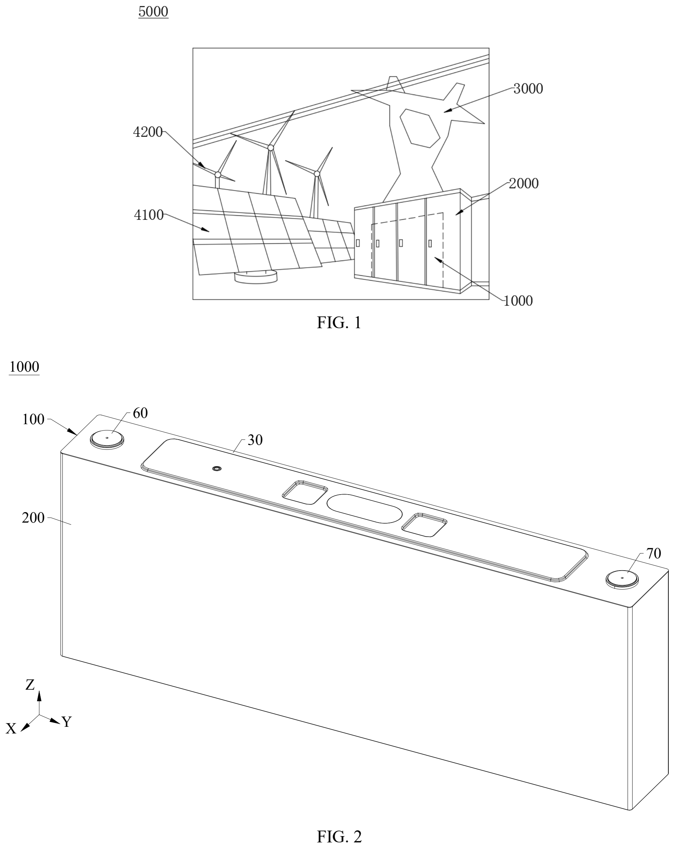

Reference can be made to FIG. 1, which is a schematic view of an application scenario of an energy storage apparatus provided in embodiments of the present disclosure.

An energy storage apparatus 1000 provided in an embodiment of the present disclosure is applied to an energy storage system 5000. The energy storage system 5000 includes a first electric-energy conversion apparatus (photovoltaic panel) 4100, a second electric-energy conversion apparatus (wind turbine) 4200, a first electricity-consumption device (power grid) 3000, a second electricity-consumption device (base station) 2000, and an energy storage apparatus 1000. The energy storage system 5000 further includes an energy storage cabinet. The energy storage apparatus 1000 is mounted in the energy storage cabinet. The energy storage cabinet may be mounted outdoors. Specifically, the first electric-energy conversion apparatus 4100 can convert solar energy into electric energy during the electricity-price valley period. The energy storage apparatus 1000 is configured to store the electric energy and provide the electric energy to the first electricity-consumption device 3000 or the second electricity-consumption device 2000 during a power-consumption peak period, or supply electricity when there is an outage/blackout in the first electricity-consumption device 3000 or the second electricity-consumption device 2000. The second electric-energy conversion apparatus 4200 can convert wind energy into electric energy. The energy storage apparatus 1000 is configured to store the electric energy and provide the electric energy to the first electricity-consumption device 3000 or the second electricity-consumption device 2000 during the power-consumption peak period, or supply electricity when there is an outage/blackout in the first electricity-consumption device 3000 or the second electricity-consumption device 2000. The electric energy may be transmitted using a high voltage cable.

It may be noted that the above first electricity-consumption device 3000, the second electricity-consumption device 2000, and other devices including the energy storage apparatus 1000 can be understood as electricity-consumption devices. The energy storage apparatus 1000 can supply power to the electricity-consumption device.

The number of energy storage apparatuses 1000 may be multiple, and the multiple energy storage apparatuses 1000 are connected in series or in parallel with each other. In this embodiment, "multiple" means two or more.

It can be understood that the energy storage apparatus 1000 may include, but is not limited to, a battery, a battery module, a battery pack, a battery system, and the like. An actual application form of the energy storage apparatus 1000 provided in embodiments of the present disclosure may be, but is not limited to, the listed products, and may also be other application forms. For example, the energy storage apparatus 1000 may be a secondary battery such as a nickel-metal hydride battery, a nickel-cadmium battery, a lead-acid (or lead-storage) battery, a lithium-ion battery, or a polymer lithium-ion battery. When the energy storage apparatus 1000 is a battery, the energy storage apparatus 1000 may be a cylindrical battery, a prismatic battery, or a battery in other shapes. In this embodiment, the energy storage apparatus 1000 is a prismatic battery. The prismatic battery is a secondary battery.

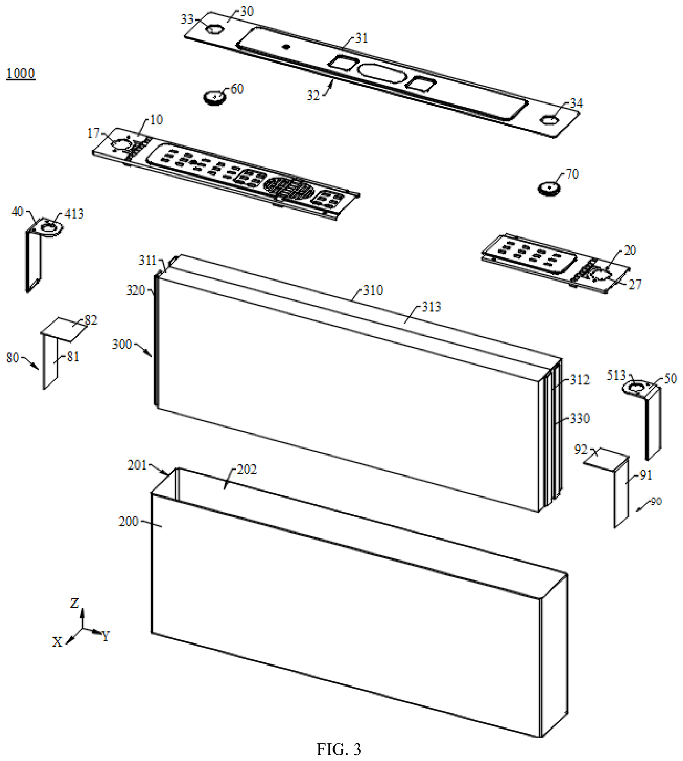

Reference can be made to FIG. 2 and FIG. 3, where FIG. 2 is a schematic structural view of an energy storage apparatus provided in embodiments of the present disclosure, and FIG. 3 is an exploded schematic structural view of the energy storage apparatus illustrated in FIG. 2.

For convenience of description, a width direction of the energy storage apparatus 1000 is defined as an X-axis direction, a length direction of the energy storage apparatus 1000 is defined as a Y-axis direction, and a height direction of the energy storage apparatus 1000 is defined as a Z-axis direction. The X-axis direction, the Y-axis direction, and the Z-axis direction are mutually perpendicular in pairs.

Orientational terms such as "upper", "top", "lower", "bottom", "left", "right", and the like mentioned in the description of embodiments of the present disclosure are described based on orientations illustrated in FIG. 2 of the specification, which do not form a limitation to the energy-storage apparatus 1000 in practical application scenarios. Specifically, the positive direction towards the Z-axis direction is considered as the top of the energy storage apparatus 1000, and the negative direction towards the Z-axis direction is considered as the bottom of the energy storage apparatus 1000. In addition, as used in the following description, "the same", "identical", "equal", or "parallel" all allow a certain tolerance to exist.

As illustrated in FIG. 2 and FIG. 3, the energy storage apparatus 1000 includes a housing 200, an end cover assembly 100, and an electrode assembly 300. The housing 200 defines an opening 201 and an accommodating cavity 202. The opening 201 is in communication with the accommodating cavity 202. The electrode assembly 300 is accommodated in the accommodating cavity 202. The end cover assembly 100 is mounted at one end of the electrode assembly in the height direction (in the Z-axis direction) of the electrode assembly 300, and is sealed at the opening 201, so as to insulate the internal environment of the energy storage apparatus 1000 from the external environment. When the housing 200 is a metal housing, the energy storage apparatus 1000 further includes an insulating film (not shown). The insulating film is positioned between the electrode assembly 300 and the housing 200, so as to insulate the electrode assembly 300 from the housing 200 and play a protective role for the electrode assembly 300.

In this embodiment, the electrode assembly 300 has a stacking-type structure for fully utilizing the space inside the housing 200, thereby increasing the volumetric energy density of the energy storage apparatus 1000. The electrode assembly 300 includes an electrode-assembly body 310 and a tab. The electrode-assembly body 310 is formed by stacking a positive electrode sheet, a negative electrode sheet, and a separator positioned between the positive electrode sheet and the negative electrode sheet together. The separator is configured to insulate the positive electrode sheet and the negative electrode sheet. Each of the positive electrode sheet and the negative electrode sheet includes a first part and a second part, where the first part is coated with an active material, and the second part extends outwardly from the first part and is not coated with the active material. The electrode-assembly body 310 has a first side-surface 311 and a second side-surface 312. In the length direction (i.e., the Y-axis direction) of the electrode-assembly body 310, the first side-surface 311 and the second side-surface 312 are disposed opposite to each other. The electrode-assembly body 310 further has a top surface 313. The top surface 313 is connected between the first side-surface 311 and the second side-surface 312. The top surface 313 faces towards the opening 201. In this embodiment, the number of electrode-assembly bodies 310 is two. The two electrode-assembly bodies 310 are connected in parallel in the Y-axis direction.

The tab includes a first tab 320 and a second tab 330. Both the first tab 320 and the second tab 330 are electrically connected to the electrode-assembly body 310. The first tab 320 and the second tab 330 are symmetric about a central axis of the electrode-assembly body 300 in the width direction of the electrode-assembly body 310, so as to ensure the symmetry of the overcurrent position of the tab, and thus ensure the stability of the current transmission of the electrode assembly 300. In the Y-axis direction, the first tab 320 is led out from the first side-surface 311 of the electrode-assembly body 310. The second tab 330 is led out from the second side-surface 312 of the electrode-assembly body 310. In this embodiment, the first tab 320 may be a positive tab, and the second tab 330 may be a negative tab. The positive tab corresponds to the second part of the positive electrode sheet that is not coated with the active material. The negative tab corresponds to the second part of the negative electrode sheet that is not coated with the active material. The number of each of the first tab 320 and the second tab 330 is two. In other embodiments, the first tab 320 may be a negative tab, and the second tab 330 may be a positive tab.

The end cover assembly 100 includes a lower plastic member, an end cover, a connector, a terminal post, and a heat insulating member. The heat insulating member is connected to the connector. The terminal post passes through the lower plastic member, the end cover, and the connector, and is connected to the connector. Specifically, the end cover assembly 100 includes a first lower plastic member 10, a second lower plastic member 20, an end cover 30, a first connector 40, a second connector 50, a first terminal-post 60, a second terminal-post 70, a first heat insulating member 80, and a second heat insulating member 90. The lower plastic member and the end cover 30 are stacked in the height direction (i.e., the Z-axis direction) of the energy storage apparatus 1000. The length of the lower plastic member is equal to or substantially equal to the length of the end cover 30. The width of the lower plastic member is equal to or substantially equal to the width of the end cover 30. The first terminal-post 60 and the second terminal-post 70 are respectively positioned at opposite ends of the end cover assembly 100 in the length direction of the end cover assembly 100. The first terminal-post 60 passes through the end cover 30 and the lower plastic member, and is connected to the first connector 40. The second terminal-post 70 passes through the end cover 30 and the lower plastic member, and is connected to the second connector 50.

As illustrated in FIG. 3, the first connector 40 and the second connector 50 are respectively positioned at opposite ends of the electrode assembly 300 in the length direction (i.e., the Y-axis direction) of the electrode assembly 300. A part of the first connector 40 is mounted at one side of the lower plastic member positioned facing away from the end cover 30. Another part of the first connector 40 is stacked with and connected to the first tab 320. The first tab 320 is electrically connected to the first terminal-post 60 through the first connector 40. A part of the second connector 50 is mounted at one side of the lower plastic member positioned facing away from the end cover 30. Another part of the second connector 50 is stacked with and connected to the second tab 330. The second tab 330 is electrically connected to the second terminal-post 70 through the second connector 50. The first heat insulating member 80 is provided between the first connector 40 and the electrode-assembly body 310. The first heat insulating member 80 is stacked on and covers a surface of the first connector 40 facing towards the electrode-assembly body 310, and covers a part of a surface of the lower plastic member. The second heat insulating member 90 is provided between the second connector 50 and the electrode-assembly body 310. The second heat insulating member 90 is stacked on and covers a surface of the second connector 50 facing towards the electrode-assembly body 310, and covers a part of a surface of the lower plastic member. The second heat insulating member 90 is configured to block heat conduction between the second connector 50 and the electrode assembly 300.

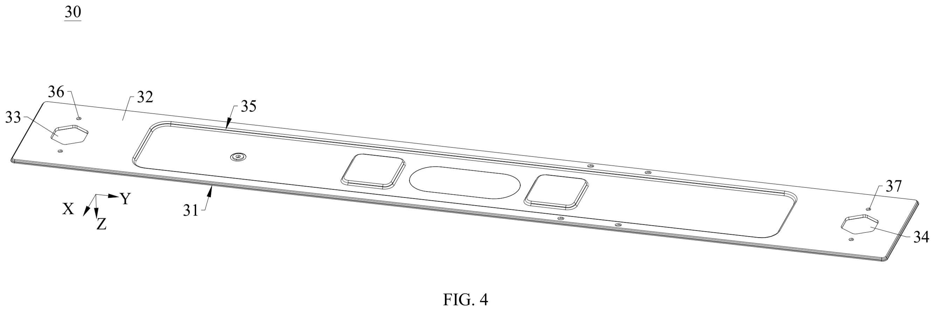

Reference can be made to FIG. 4, which is a schematic structural view of an end cover of an end cover assembly in the energy storage apparatus illustrated in FIG. 3 at an angle. In this embodiment, the end cover 30 is a smooth aluminum member. The lower plastic member is made of an insulating material such as plastic. The first heat insulating member 80 and the second heat insulating member 90 may be, but is not limited to, a high-temperature adhesive. The high-temperature adhesive has characteristics of being smooth, hardly displaced, high-temperature resistant, small in volume, non-reactive with electrolyte, capable of blocking heat conduction, and the like. The high-temperature adhesive may be, but is not limited to, made of a material that insulates heat and does not easily fall off, such as a polyimide tape, a Teflon tape, or a Teflon coating. The first terminal-post 60 is a positive terminal post, and the second terminal-post 70 is a negative terminal post. Alternatively, the first terminal-post 60 is a negative terminal post, and the second terminal-post 70 is a positive terminal post.

In this embodiment, the end cover 30 is an elongated thin plate. The end cover 30 has an upper surface 31 and a lower surface 32. The upper surface 31 and the lower surface 32 are positioned facing away from each other in the thickness direction (i.e., the Z-axis direction) of the end cover 30.

The end cover 30 defines a first terminal-post through-hole 33 and a second terminal-post through-hole 34. The first terminal-post through-hole 33 extends through the upper surface 31 and the lower surface 32 in the thickness direction of the end cover 30. The first terminal-post through-hole 33 is used for the first terminal-post 60 to pass through. The second terminal-post through-hole 34 extends through the upper surface 31 and the lower surface 32. The second terminal-post through-hole 34 is used for the second terminal-post 70 to pass through. In the length direction (i.e., the Y-axis direction) of the end cover 30, the first terminal-post through-hole 33 and the second terminal-post through-hole 34 are respectively positioned at opposite ends of the end cover 30. In this embodiment, the first terminal-post through-hole 33 and the second terminal-post through-hole 34 are both circular holes. In some embodiments, the shapes of the first terminal-post through-hole 33 and the second terminal-post through-hole 34 may be elliptical, rectangular, or the like, which is not strictly limited in the present disclosure.

The end cover 30 further defines a recess 35. The recess 35 is recessed from the lower surface 32 of the end cover 30. In the thickness direction of the end cover 30, the recess 35 is recessed in a direction from the lower surface 32 of the end cover 30 to the upper surface 31 of the end cover 30. In the length direction of the end cover 30, the recess 35 is positioned between the first terminal-post through-hole 33 and the second terminal-post through-hole 34, and is spaced apart from the first terminal-post through-hole 33 and the second terminal-post through-hole 34. The recess 35 is used for matching of the first lower plastic member 10 and the second lower plastic member 20. In this embodiment, the recess 35 is an elongated recess. In some embodiments, the upper surface 31 of the end cover 30 is provided with an insulator (not shown). The insulator completely covers the upper surface 31 of the end cover 30. The insulating member is configured to protect the end cover 30, so as to prevent the end cover 30 from being scratched and prevent affecting the use of the end cover 30. The end cover 30 further includes a first limiting groove 36 and a second limiting groove 37. The first limiting groove 36 is used for mating and positioning with the first limiting post 19. The second limiting groove 37 is used for mating and positioning with the second limiting post 29.

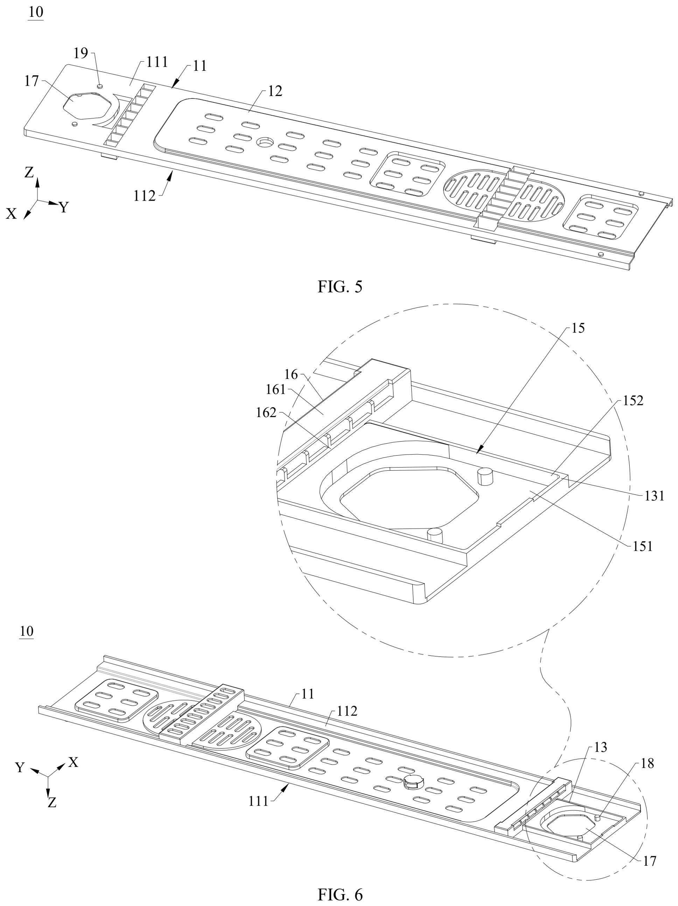

Reference can be made to FIG. 5 and FIG. 6, where FIG. 5 is a schematic structural view of a first lower plastic member of an end cover assembly in the energy storage apparatus illustrated in FIG. 3, and FIG. 6 is a schematic structural view of the first lower plastic member illustrated in FIG. 5 at another angle. In this embodiment, the first lower plastic member 10 and the second lower plastic member 20 have split structures. In other embodiments, the first lower plastic member 10 and the second lower plastic member 20 may have an integral structure.

In this embodiment, the first lower plastic member 10 is an elongated thin plate. The first lower plastic member 10 includes a first body 11. The first body 11 has a first top-face 111 and a first bottom-face 112. The first top-face 111 and the first bottom-face 112 are positioned facing away from each other in the thickness direction (i.e., the Z-axis direction) of the first body 11.

The first lower plastic member 10 further includes a first raised portion 12. In the thickness direction (that is, the Z-axis direction) of the first lower plastic member 10, the first raised portion 12 protrudes from the first top-face 111 of the first body 11. The first raised portion 12 is used for limiting and fixing with the end cover 30. In this embodiment, the first raised portion 12 is an elongated protrusion.

The first lower plastic member 10 further includes a first boss 13. The first boss 13 protrudes from the first bottom-face 112 of the first body 11. In the length direction (i.e., the Y-axis direction) of the first lower plastic member 10, the first boss 13 is positioned at one end of the first lower plastic member 10. The first boss 13 has a first boss-face 131. The first boss-face 131 is positioned facing away from the first body 11 and has the same orientation as the first bottom-face 112. In this embodiment, the first boss 13 is a substantially rectangular protrusion.

The first lower plastic member 10 further defines a first assembling groove 15. The first assembling groove 15 is recessed from the first boss-face 131 of the first boss 13, and is recessed towards the first body 11. The first assembling groove 15 is used for accommodating a part of the first connector 40. The first assembling groove 15 has a first groove-bottom-face 151 and a first groove-circumferential-face 152. The first groove-bottom-face 151 has the same orientation as the first bottom-face 112. The first groove-circumferential-face 152 surrounds a peripheral edge of the first groove-bottom-face 151 and is connected to the first groove-bottom-face 151.

The first lower plastic member 10 further includes a first protrusion 16. The first protrusion 16 protrudes from the first bottom-face 112. In the Y-axis direction, the first boss 13 is adjacent to the first protrusion 16. It can be understood that the first protrusion 16 is spaced apart from the first assembling groove 15 in the Y-axis direction. In this embodiment, the first protrusion 16 extends in the X-axis direction. The first protrusion 16 has a first protrusion-face 161. In the Z-axis direction, the first protrusion-face 161 is positioned facing away from the first top-face 111. In this embodiment, the first protrusion 16 is a substantially elongated protrusion. The length (i.e., the dimension in the X-axis direction) of the first protrusion 16 is greater than the width (i.e., the dimension in the X-axis direction) of the first boss 13.

In this embodiment, a distance from the first protrusion-face 161 to the first bottom-face 112 is larger than a distance from the first boss-face 131 to the first bottom-face 112. That is, a height of the first protrusion 16 protruding from the first bottom-face 112 of the first body 11 is larger than a height of the first boss 13 protruding from the first bottom-face 112. The first protrusion-face 161 and the first boss-face 131 of the first boss 13 are not on the same horizontal plane. The first protrusion 16 further includes a first protrusion-side-surface 162. The first protrusion-side-surface 162 is positioned facing towards the first protrusion 13 and connected to the first protrusion surface 131. In fact, the length and width dimensions of the first protrusion 16 can be determined according to the length and width dimensions of both the first boss 13 and the first lower plastic member 10.

In other embodiments, the distance from the first protrusion-face 161 to the first bottom-face 112 is equal to the distance from the first boss-face 131 to the first bottom-face 112. That is, the height of the first protrusion 16 protruding from the first bottom-face 112 is equal to the height of the first boss 13 protruding from the first bottom-face 112. The first protrusion-face 161 is flush (i.e., on the same horizontal plane) with the first boss-face 131 of the first boss 13.

The first lower plastic member 10 further includes multiple first positioning posts 18 and multiple first limiting posts 19. The multiple first positioning posts 18 all protrude from the first groove-bottom-face 151 of the first assembling groove 15. The first limiting posts 19 protrude from the first top-face 111. Each first positioning post 18 is spaced apart from a peripheral edge of the first through-hole 17, each second limiting post 19 is spaced apart from a peripheral edge of the first through-hole 17, and the multiple first positioning posts 18 are arranged at intervals from each other. The first positioning post 18 is configured for assembling and positioning the first connector 40. In this embodiment, the first positioning post 18 has a columnar shape. The number of the first positioning posts 18 is two. The first limiting posts 19 is engaged with the end cover.

In other embodiments, the first lower plastic member 10 further defines a first mounting groove (not shown). The first mounting groove is recessed from the first boss-face 131 of the first boss 13, and is recessed towards the first body 11. The first mounting groove is used for accommodating at least a part of the heat insulating member, so as to reduce the space occupied by the heat insulating member in the thickness direction of the end cover assembly 100. The first mounting groove has a first groove-sidewall and a first groove-bottom-wall. The first groove-bottom-wall has the same orientation as the first bottom-face 112. The first groove-sidewall surrounds a peripheral edge of the first groove-bottom-wall and is connected to the first groove-bottom-wall. The first assembling groove 15 is recessed from the first groove-bottom-wall and is recessed towards the first top-face 111. It can be understood that an opening orientation of the first assembling groove 15 is consistent with an opening orientation of the first mounting groove. In the Z-axis direction, an orthographic projection of the first assembling groove 15 on the first lower plastic member 10 falls within the range of an orthographic projection of the first mounting groove on the first lower plastic member 10. The first protrusion 16 is adjacent to and connected to the first mounting groove. The first protrusion-side-surface 162 of the first protrusion 16 constitutes a wall surface of the first groove-sidewall of the first mounting groove positioned facing towards the first groove-bottom-wall.

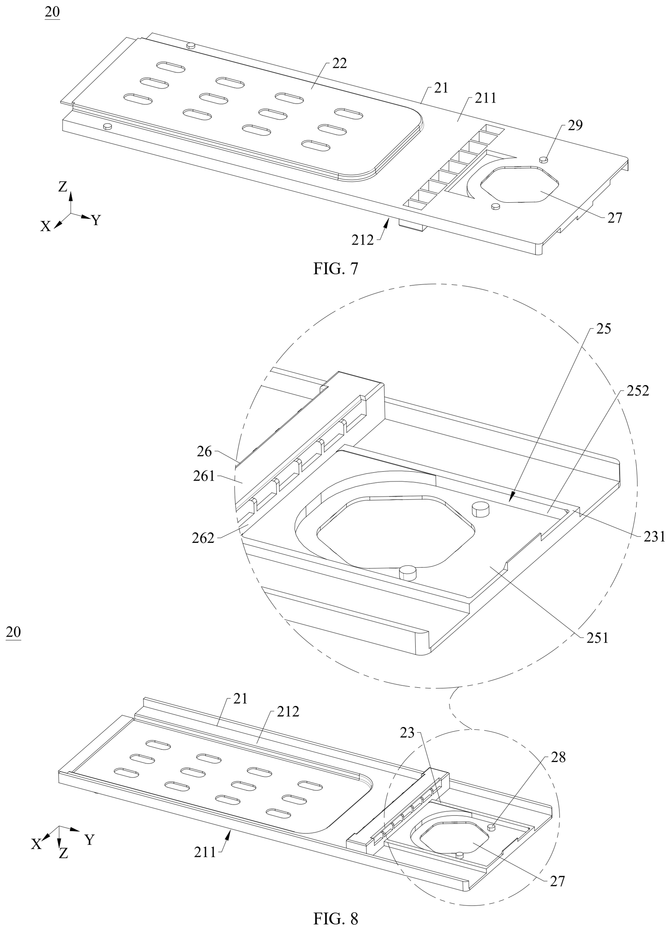

Reference can be made to FIG. 7 and FIG. 8, where FIG. 7 is a schematic structural view of a second lower plastic member of an end cover assembly in the energy storage apparatus illustrated in FIG. 3, and FIG. 8 is a schematic structural view of the second lower plastic illustrated in FIG. 7 at another angle.

In this embodiment, the structure of the second lower plastic member 20 is similar to the structure of the first lower plastic member 10. The second lower plastic member 20 is an elongated thin plate. The second lower plastic member 20 includes a second body 21. The second body 21 has a second top-face 211 and a second bottom-face 212. The second top-face 211 and the second bottom-face 212 are positioned facing away from each other in the thickness direction (i.e., the Z-axis direction) of the second body 21.

The second lower plastic member 20 further includes a second raised portion 22. In the thickness direction (that is, the Z-axis direction) of the second lower plastic member 20, the second raised portion 22 protrudes from the second top-face 211 of the second body 21. The second raised portion 22 is used for limiting and fixing with the end cover 30. In this embodiment, the second raised portion 22 is an elongated protrusion.

The second lower plastic member 20 further includes a second boss 23. The second boss 23 protrudes from the second bottom-face 212 of the second body 21. In the length direction (i.e., the Y-axis direction) of the second lower plastic member 20, the second boss 23 is positioned at one end of the second lower plastic member 20 away from the second raised portion 22. The second boss 23 has a second boss-face 231. The second boss-face 231 is positioned facing away from the second body 21 and has the same orientation as the second bottom-face 212. In this embodiment, the second boss 23 is a substantially rectangular protrusion.

The second lower plastic member 20 further defines a second assembling groove 25. The second assembling groove 25 is recessed from the second boss-face 231 of the second boss 23, and is recessed towards the second body 21. The second assembling groove 25 is used for accommodating a part of the second connector 50. The second assembling groove 25 has a second groove-bottom-face 251 and a second groove-circumferential-face 252. The second groove-bottom-face 251 has the same orientation as the second bottom-face 212. The second groove-circumferential-face 252 surrounds a peripheral edge of the second groove-bottom-face 251 and is connected to the second groove-bottom-face 251.

The second lower plastic member 20 further includes a second protrusion 26. The second protrusion 26 protrudes from the second bottom-face 212. In the Y-axis direction, the second boss 23 is adjacent to the second protrusion 26. It can be understood that the second protrusion 26 is spaced apart from the second assembling groove 25 in the Y-axis direction. In this embodiment, the second protrusion 26 extends in the X-axis direction. The second protrusion 26 has a second protrusion-face 261. In the Z-axis direction, the second protrusion-face 261 is positioned facing away from the second top-face 211. In this embodiment, the second protrusion 26 is a substantially rectangular protrusion. The length (i.e., the dimension in the X-axis direction) of the second protrusion 26 is larger than the width (i.e., the dimension in the X-axis direction) of the second boss 23.

In this embodiment, a distance from the second protrusion-face 261 to the second bottom-face 212 is larger than a distance from the second boss-face 231 to the second bottom-face 212. That is, a height of the second protrusion 26 protruding from the second bottom-face 212 of the second body 21 is larger than a height of the second boss 23 protruding from the second bottom-face 212. The second protrusion-face 261 and the second boss-face 231 of the second boss 23 are not on the same horizontal plane. The second protrusion 26 further has a second protrusion-side-surface 262. The second protrusion-inner-side-surface 262 is positioned facing towards the second boss 23 and is connected to the second boss-face 231. In fact, the length and width dimensions of the second protrusion 26 can be determined according to the length and width dimensions of the second boss 23 and the second lower plastic member 20. It can be understood that the second protrusion-face 261 of the second convex 26 can be regarded as the second bottom-face 212.

The second lower plastic member 20 further defines a second through-hole 27. The second through-hole 27 extends through the second groove-bottom-face 251 of the second assembling groove 25 and the second top-face 211 of the second body 21. The second through-hole 27 is used for the second terminal-post 70 to pass through. In this embodiment, the second through-hole 27 is a hexagonal hole. In some embodiments, the second through-hole 27 may be a circular shape, an elliptical shape, or the like, which is not strictly limited in the present disclosure.

The second lower plastic member 20 further includes multiple second positioning posts 28 and multiple limiting posts 29. The multiple second positioning posts 28 all protrude from the second groove-bottom-face 251 of the second assembling groove 25. The second limiting posts 29 protrude from the second top-face 211. Each second positioning post 28 is spaced apart from a peripheral edge of the second through-hole 27, and the multiple second positioning posts 28 are arranged at intervals from each other. The second positioning post 28 is configured for assembling and positioning the second connector 50. In this embodiment, the second positioning post 28 has a columnar shape. The number of the second positioning posts 28 is two.

In other embodiments, the second lower plastic member 20 further defines a second mounting groove (not shown). The second mounting groove is recessed from the second boss-face 231 of the second boss 23, and is recessed towards the second body 21. The second mounting groove is used for accommodating at least a part of the heat insulating member, so as to reduce the space occupied by the heat insulating member in the thickness direction of the end cover assembly 100. The second mounting groove has a second groove-sidewall and a second groove-bottom-wall. The second groove-bottom-wall has the same orientation as the second bottom-face 212. The second groove-sidewall surrounds a peripheral edge of the second groove-bottom-wall and is connected to the second groove-bottom-wall. The second assembling groove 25 is recessed from the second groove-bottom-wall and is recessed towards the second top-face 211. It can be understood that an opening orientation of the second assembling groove 25 is consistent with an opening orientation of the second mounting groove. In the Z-axis direction, an orthographic projection of the second assembling groove 25 on the second lower plastic member 20 falls within the range of an orthographic projection of the second mounting groove on the second lower plastic member 20. The second protrusion 26 is adjacent to and connected to the second mounting groove. The second protrusion-side-surface 262 of the second protrusion 26 constitutes a wall surface of the second groove-sidewall of the second mounting groove positioned facing towards the second groove-bottom-wall.

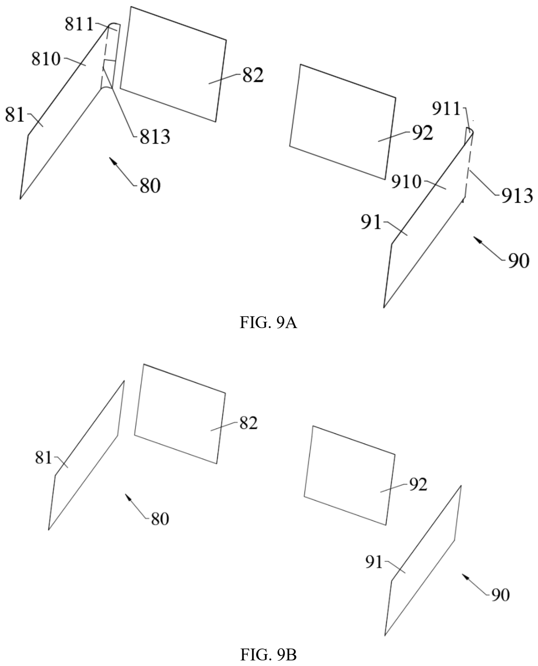

Reference can be made to FIG. 3 and FIG. 9A, where FIG. 9A is a schematic structural view of a first heat insulating member and a second heat insulating member of the energy storage apparatus illustrated in FIG. 2 of one embodiment. The first heat insulating member 80 covers the first connector 40 at one side of the first connector 40 positioned facing away from the first lower plastic member. The first heat insulating member 80 includes a first side-heat-insulating-member 81 and a first end-heat-insulating-member 82. The widths of the first side-heat-insulating-member 81 and the first end-heat-insulating-member 82 may be equal or different depending on the widths of connector at positions corresponding to the first side-heat-insulating-member 81 and the first end-heat-insulating-member 82. The second heat insulating member 90 covers the second connector 50 at one side of the second connector 50 positioned facing away from the second lower plastic member. The second heat insulating member 90 includes a second side-heat-insulating-member 91 and a second end-heat-insulating-member 92. The widths of the second side-heat-insulating-member 91 and the second end-heat-insulating-member 92 may be equal or different depending on the widths of the connector at positions corresponding to the second side-heat-insulating-member 91 and the second end-heat-insulating-member 92.

In this embodiment, as illustrated in FIG. 9A, the first side-heat-insulating-member 81 and the first end-heat-insulating-member 82 are separate components. The first side-heat-insulating-member 81 includes a first part 810 and a second part 811 connected to the first part 820. The first part 810 has an adhesive surface. The second part 811 has a non-adhesive surface. The second part 811 is embodied in a bent form to correspond to a bending portion, or may actually be embodied in a flat state. When the first heat insulating member 80 covers the first connector 40, the second part 811 partially overlaps the first end-heat-insulating-member 82.

The first side-heat-insulating-member 81 includes a heat-insulating base layer and an adhesive layer. The heat-insulating base layer includes a first heat-insulating section and a second heat-insulating section connected to the first heat-insulating section. The first heat-insulating section and the second heat-insulating section are distributed in the length direction of the first side-heat-insulating-member 81. The adhesive layer is completely stacked on the surface of the first heat-insulating section in the thickness direction of the first heat-insulating section. The adhesive layer may completely cover the surface of the first heat-insulating section, and an end of the adhesive layer is positioned at a boundary line between the first heat-insulating section and the second heat-insulating section, that is, there is no adhesive layer on the second heat-insulating section. The heat-insulating base layer is a flexible film layer which may be transparent or non-transparent. The adhesive layer may be a double-sided adhesive tape, or may be directly formed on the surface of the first heat-insulating section. The first part 810 is the first heat-insulating section provided with the adhesive layer, and the second part 811 is the second heat-insulating section without the adhesive layer.

The first side-heat-insulating-member 81 is provided with a first indentation 813. The first indentation 813 extends in the width direction of the first heat insulating member 80. The first indentation 813 is formed by laser cutting. The actual indentation is positioned at one side, close to the second part, of the boundary line between the first part 810 and the second part 811. The first indentation 813 can position the adhesive layer of the first heat-insulating section on the first side-heat-insulating-member 81, thereby facilitating preparation of the adhesive layer of the first part 810 (the first heat-insulating section). The first indentation 813 can also be easily bent when the first heat insulating member 80 is applied, thereby facilitating operation.

In this embodiment, the second side-heat-insulating-member 91 and the second end-heat-insulating-member 92 are separate components. The second side-heat-insulating-member 91 includes a third part 910 and a fourth part 911. The third part 910 has an adhesive surface. The fourth part 911 has a non-adhesive surface. When the second heat insulating member 90 covers the second connector 50, the fourth part 911 partially overlaps the second end-heat-insulating-member 92.

The second side-heat-insulating-member 91 includes a heat-insulating base layer and an adhesive layer. The heat-insulating base layer includes a first heat-insulating section and a second heat-insulating section connected to the first heat-insulating section. The first heat-insulating section and the second heat-insulating section are distributed in the length direction of the second side-heat-insulating-member 91. The adhesive layer is completely stacked on the surface of the first heat-insulating section in the thickness direction of the first heat-insulating section. The adhesive layer may completely cover the surface of the first heat-insulating section, and an end of the adhesive layer is positioned at a boundary line between the first heat-insulating section and the second heat-insulating section, that is, there is no adhesive layer on the second heat-insulating section. The heat-insulating base layer is a flexible film layer which may be transparent or non-transparent. The adhesive layer may be a double-sided adhesive tape, or may be directly formed on the surface of the first heat-insulating section. The third part 910 is the first heat-insulating section provided with the adhesive layer, and the fourth part 911 is the second heat-insulating section without the adhesive layer.

The second side-heat-insulating-member 91 is provided with a second indentation 913. The second indentation 913 extends in the width direction of the second heat insulating member 90. The second indentation 913 is formed by laser cutting. The second indentation 913 can position the adhesive layer of the second side-heat-insulating-member 91, thereby facilitating preparation of the third part 910 and the fourth part 911. The second indentation 913 is positioned at one side, close to the fourth part 911, of the boundary line between the third part 910 and the fourth part 911.

In this embodiment, the first heat insulating member 80 and the second heat insulating member 90 have characteristics of being smooth, hardly displaced, high-temperature resistant, small in volume, non-reactive with electrolyte, capable of blocking heat conduction, and the like. The smooth surfaces of the first heat insulating member 80 and the second heat insulating member 90 can promote the circulation of the electrolyte in the vicinity of the first heat insulating member 80 and the second heat insulating member 90. The heat insulating member may be, but is not limited to, made of a material that insulates heat and does not easily fall off, such as a polyimide tape, a Teflon tape, or a Teflon coating. Exemplarily, the heat insulating member is a high-temperature adhesive.

The first part 810 and the third part 910 may be referred to as the first heat-insulating section. The second part and the fourth part may be referred to as the second heat-insulating section.

It may be noted that the first heat insulating member 80 and the second heat insulating member 90 described in the present disclosure are adhered to the corresponding connectors by adhesive layers or other adhesives carried by the first heat insulating member 80 and the second heat insulating member 90.

FIG. 9B is a schematic structural view of a first heat insulating member and a second heat insulating member of the energy storage apparatus illustrated in FIG. 2 of another embodiment.

In this embodiment, the first heat insulating member 80 includes a first side-heat-insulating-member 81 and a first end-heat-insulating-member 82. The length and width of the first side-heat-insulating-member 81 may equal to or different from the length and width of the first end-heat-insulating-member 82 depending on widths of the connector at positions corresponding to the first side-heat-insulating-member 81 and the first end-heat-insulating-member 82. The second heat insulating member 90 covers the side of the second connector 50 facing away from the second lower plastic member. The second heat insulating member 90 includes a second side-heat-insulating-member 91 and a second end-heat-insulating-member 92.

The difference between this embodiment and the embodiment illustrated in FIG. 9A is that the first side-heat-insulating-member 81 and the second side-heat-insulating-member 91 do not need to be distinguished. No indentation is provided. The entirety of the first side-heat-insulating-member 81 and the second side-heat-insulating-member 91 is provided with an adhesive layer.

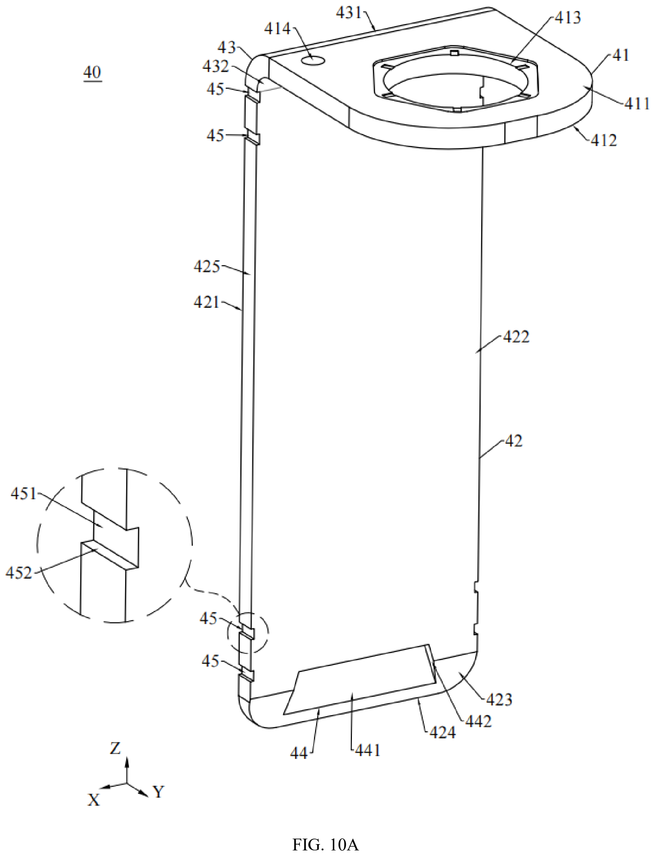

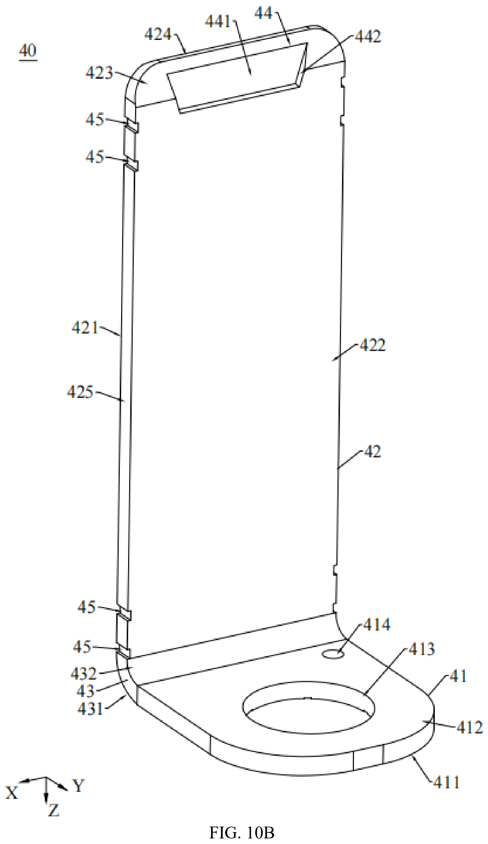

Reference can be made to FIG. 10A and FIG. 10B, where FIG. 10A is a schematic structural view of a first connector of the energy storage apparatus illustrated in FIG. 3 at an angle, and FIG. 10B is a schematic structural view of a first connector of the energy storage apparatus illustrated in FIG. 10A at another angle.

In this embodiment, the first connector 40 is a metal sheet. The first connector 40 includes a first connecting portion 41, a first transition portion 42, and a first bending portion 43. The first bending portion 43 is connected between the first connecting portion 41 and the first transition portion 42. An extending direction of the first connecting portion 41 and the extending direction of the first transition portion 42 define an angle therebetween. The first connecting portion 41 is accommodated in the first assembling groove 15 of the first lower plastic member 10, and is fixed to the first terminal-post 60 by welding and is electrically connected to the first terminal-post 60. The first transition portion 42 is fixed to the first tab 320 of the electrode assembly 300 by welding and is electrically connected to the first tab 320. That is, the first connector 40 is configured to transfer the current from the electrode assembly 300 sequentially through the first transition portion 42, the first bending portion 43, and the first connecting portion 41 to the first terminal-post 60. It can be understood that the first connector 40 has a substantially L-shaped bending structure. The first connecting portion 41 and the first transition portion 42 are positioned on different planes.

Specifically, the first connecting portion 41 has a first outer surface 411 and a first inner surface 412. The first outer surface 411 and the first inner surface 412 are positioned facing away from each other in the thickness direction (i.e., the Z-axis direction) of the first connecting portion 41. The first inner surface 412 is used for connection with the first end-heat-insulating-member 82.

The first connecting portion 41 further defines a first via hole 413. The first via hole 413 extends through the first outer surface 411 and the first inner surface 412. The first via hole 413 is used for the first terminal-post 60 to pass through. A hole wall of the first via hole 413 is connected to the first terminal-post 60. In this embodiment, the shape of the first connecting portion 41 matches the shape of the first assembling groove 15. The first via hole 413 is a circular hole. In some embodiments, the first via hole 413 may also be a rectangular hole, an elliptical hole, or the like, which is not strictly limited in the present disclosure.

The first connecting portion 41 further defines multiple first limiting holes 414. The multiple first limiting holes 414 each extend through the first outer surface 411 and the first inner surface 412. Each first limiting hole 414 is spaced apart from a peripheral edge of the first via hole 413, and the multiple first limiting holes 414 are defined at intervals from each other. Each first limiting hole 414 is used for one first positioning post 18 of the first lower plastic member 10 to pass through. In this embodiment, the positions, number, and shapes of the first limiting holes 414 are matched with the positions, number, and shapes of the first positioning posts 18, respectively. The first limiting hole 414 is a circular hole. The number of the first limiting holes 414 is two.

In this embodiment, the first transition portion 42 is a rectangular sheet. In this embodiment, the first transition portion 42 is a rectangular sheet. The first transition portion 42 has a first outer-side-surface 421, a first inner-side-surface 422, and a first guide face 423. The first guide face 423 is connected to the first inner-side-surface 422. The first guide face 423 and the first inner-side-surface 422 are positioned facing away from the first outer-side-surface 421, in the thickness direction (that is, the Y-axis direction) of the first transition portion 42. The first outer-side-surface 421 is connected to the first outer surface 411 of the first connecting portion 41. The first inner-side-surface 422 is connected to the first inner surface 412 of the first connecting portion 41. The first transition portion 42 further has a first end-face 424 and two first side-surfaces 425. The two first side-surfaces 425 are positioned facing away from each other in the width direction of the first transition portion 42. Each of the first side-surfaces 425 is connected between the first outer-side-surface 421 and the first inner-side-surface 422. The first end-face 424 is connected to the first outer-side-surface 421, the first guide face 423, and the two first side-surfaces 425. The first end-face 424 is an end face of the first transition portion 42 away from the first connecting portion 41. In this embodiment, the first outer-side-surface 421 includes a welding region (not shown). The welding region is a region where a welding mark is generated when the tab and the first transition portion 42 are welded, and this region is actually determined according to the position where the tab and the first transition portion 42 are welded. Here, the definition of this region is given in advance for ease of description. The first inner-side-surface 422 is used for connection with the first side-heat-insulating-member 81. In the thickness direction of the first transition portion 42, the orthographic projection of the welding region is completely positioned in the first side-heat-insulating-member 81.

It can be understood that in the Z-axis direction, the first guide face 423 is farther away from the first connecting portion 41 than the first inner-side-surface 422. It can also be understood that the first guide face 423 belongs to a part of the first inner-side-surface 422. In this embodiment, the first guide face 423 is an inclined surface. The first guide face 423 is inclined in the length direction of the first transition portion 42 towards the first outer-side-surface 421.

The first transition portion 42 further defines a first avoidance groove 44. The first avoidance groove 44 is recessed from the first guide face 423 and the first inner-side-surface 422, and is recessed towards the first outer-side-surface 421. It can be understood that a part of the first avoidance groove 44 is recessed from the first guide face 423, and the other part of the first avoidance groove 44 is recessed from the first inner-side-surface 422. The first avoidance groove 44 has three first groove-sidewalls 442 and a first groove-bottom-wall 441. In this embodiment, the first groove-bottom-wall 441 and the first inner-side-surface 422 have the same orientation. In other implementations, the first groove-bottom-wall 441 may be inclined. Each of the three first groove-sidewalls 442 is connected to an edge of the first groove-bottom-wall 441, the first inner-side-surface 422, and the first guide face 423. The three first groove-sidewalls 442 are connected in sequence and arranged at an angle. An edge of the first groove-bottom-wall 441 away from the first inner-side-surface 422 is connected to the first guide face 423. The first groove-bottom-wall 441 is arranged at an angle with the first guide face 423, and the first groove-bottom-wall 441 is arranged at an angle with each of the three first groove-sidewalls 442. Two of the three first groove-sidewalls 442 are positioned facing towards each other and spaced apart from each other in the length direction (i.e., the X-axis direction) of the first avoidance groove 44, and both of the two first groove-sidewalls 442 are connected to the first guide face 423 and the first inner-side-surface 422. The remaining one of the three first groove-sidewalls 442 is connected between the two first groove-sidewalls 442 and is connected to the first inner-side-surface 422.

In this embodiment, the first avoidance groove 44 is a trapezoidal groove. The first groove-bottom-wall 441 is a trapezoidal surface, and a long edge of the trapezoidal surface is closer to the first end-face 424 than a short edge of the trapezoidal surface. Both of the two first groove-sidewalls 442 in the length direction of the first avoidance groove 44 are trapezoidal, and in the length direction of the first transition portion 42, both of the two first groove-sidewalls 442 are inclined away from the first end-face 424. In the length direction of the first transition portion 42 and in the direction from the first end-face 424 towards the first connecting portion 41, a distance between the two opposite first groove-sidewalls 442 gradually decreases. The first transition portion 42 further defines a first anti-slip groove 45. The first anti-slip groove 45 is recessed from the first side-surface 425 of the first transition portion 42 towards the interior of the first transition portion 42. The first anti-slip groove 45 extends through the first outer-side-surface 421 and the first inner-side-surface 422. The first anti-slip groove 45 has three openings, and the three openings are positioned on the first side-surface 425, the first outer-side-surface 421, and the first inner-side-surface 422, respectively. The first anti-slip groove 45 has a first wall-surface 451 and two first groove-surfaces 452. The first wall-surface 451 is arranged facing towards the opening on the first side-surface 425. Both of the two first groove-surfaces 452 are connected to the first wall-surface 451, the first outer-side-surface 421, the first inner-side-surface 422, and the first side-surface 425. Each of the two first groove-surfaces 452 is arranged at an angle with the first wall-surface 451, the first outer-side-surface 421, the first inner side surface, and the first side-surface 425.

In this embodiment, the first anti-slip groove 45 is an opening through groove that is substantially rectangular. The number of the first anti-slip grooves 45 is multiple. In the width direction of the first transition portion 42, the number of first anti-slip grooves 45 defined on one side of the first transition portion 42 is equal to the number of first anti-slip grooves 45 defined on the other side of the first transition portion 42. The multiple first anti-slip grooves 45 defined on one side of the first transition portion 42 in the width direction of the first transition portion 42 are defined at intervals in the length direction of the first transition portion 42. The multiple first anti-slip grooves 45 defined on the other side of the first transition portion 42 in the width direction of the first transition portion 42 are defined at intervals in the length direction of the first transition portion 42. The multiple first anti-slip grooves 45 defined on each of both sides of the first transition portion 42 in the width direction of the second transition portion 42 are distributed at both opposite ends in the length direction of the first transition portion 42.

Exemplarily, the number of the first anti-slip grooves 45 is eight. Four first anti-slip grooves 45 are positioned at one side of the first transition portion 42 in the width direction of the first transition portion 42, and the four first anti-slip grooves 45 are respectively positioned at opposite ends of the first side-surface 425 in the length direction of the first side-surface 425. The other four first anti-slip grooves 45 are positioned at the other side of the first transition portion 42 in the width direction of the first transition portion 42, and the other four first anti-slip grooves 45 are respectively positioned at opposite ends of the first side-surface 425 in the length direction of the first side-surface 425. In an implementation, the multiple first anti-slip grooves 45 are symmetrical about a central axis extending in the width direction of the first transition portion 42, so as to ensure the stability of force when in contact with the first heat insulating member 80.

The first bending portion 43 has a first outer-curved-surface 431 and a first inner-curved-surface 432. The first outer-curved-surface 431 and the first inner-curved-surface 432 are positioned facing away from each other in the thickness direction of the first bending portion 43. The first outer-curved-surface 431 is connected between the first outer surface 411 and the first outer-side-surface 421. The first inner-curved-surface 432 is connected between the first inner surface 412 and the first inner-side-surface 422. The first inner-curved-surface 432 is used for connection with the heat insulating member 80.

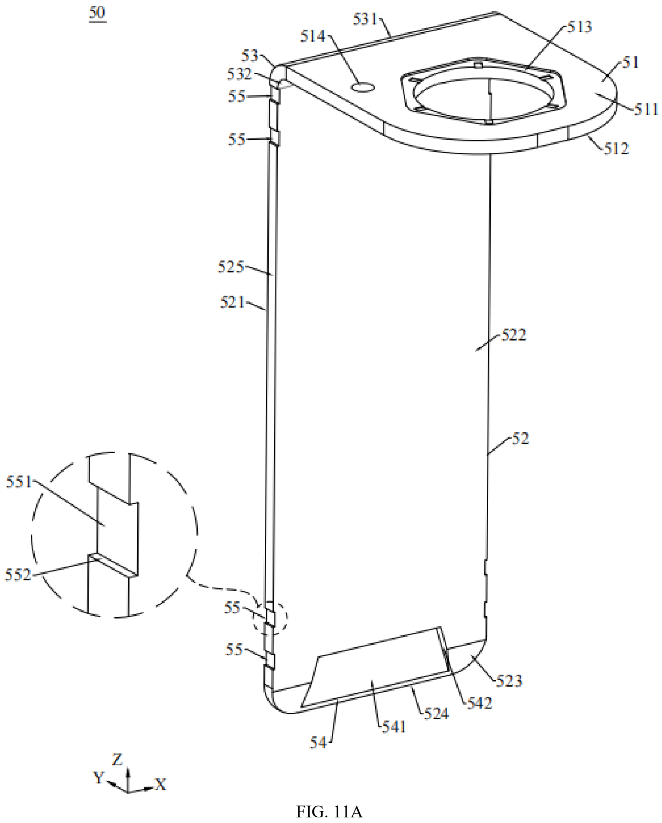

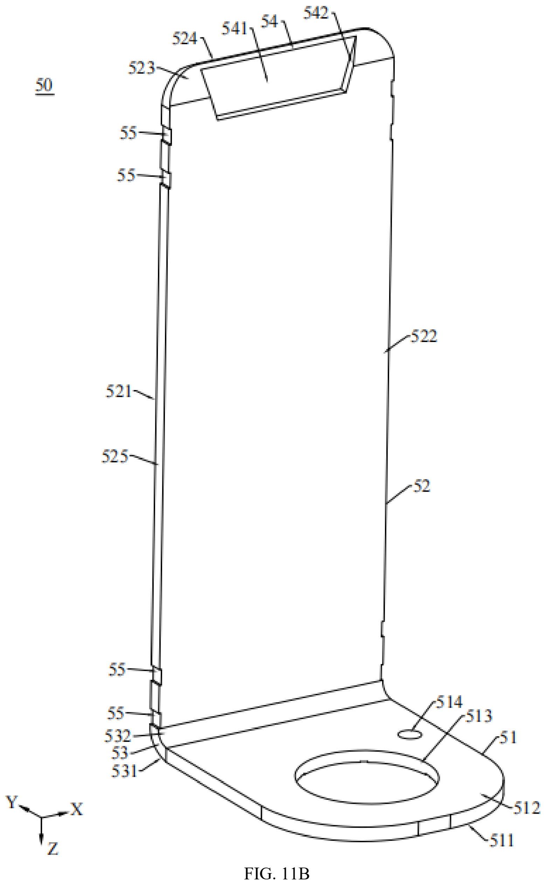

Reference can be made to FIG. 11A and FIG. 11B, where FIG. 11A is a schematic structural view of a second connector of the energy storage apparatus illustrated in FIG. 3 at an angle, and FIG. 11B is a schematic structural view of a second connector of the energy storage apparatus illustrated in FIG. 11A at another angle.

In this embodiment, the structure of the second connector 50 is similar to the structure of the first connector 40. The second connector 50 is a metal sheet. The second connector 50 includes a second connecting portion 51, a second transition portion 52, and a second bending portion 53. The second bending portion 53 is connected between the second connecting portion 51 and the second transition portion 52. The second connecting portion 51 is accommodated in the second assembling groove 25 of the second lower plastic member 20, and is fixed to the second terminal-post 70 by welding and is electrically connected to the second terminal-post 70. The second transition portion 52 is fixed to the second tab 330 of the electrode assembly 300 by welding and is electrically connected to the second tab 330. That is, the second connector 50 is configured to transfer the current from the electrode assembly 300 sequentially through the second transition portion 52, the second bending portion 53, and the second connecting portion 51 to the second terminal-post 70. It can be understood that the second connector 50 has a substantially L-shaped bending structure. The second connecting portion 41 and the second transition portion 52 are positioned on different planes.

Specifically, the second connecting portion 51 has a second outer surface 511 and a second inner surface 512. The second outer surface 511 and the second inner surface 512 are positioned facing away from each other in the thickness direction (i.e., the Z-axis direction) of the second connecting portion 51. The second inner surface 512 is used for connection with the heat insulating member 80.

The second connecting portion 51 further defines a second via hole 513. The second via hole 513 extends through the second outer surface 511 and the second inner surface 512. The second via hole 513 is used for the second terminal-post 70 to pass through. A hole wall of the second via hole 513 is connected to the second terminal-post 70. In this embodiment, the shape of the second connecting portion 51 matches the shape of the second assembling groove 25. The second via hole 513 is a circular hole. In some embodiments, the second via hole 513 may also be a rectangular hole, an elliptical hole, or the like, which is not strictly limited in the present disclosure.

The second connecting portion 51 further defines multiple second limiting holes 514. The multiple second limiting holes 514 each extend through the second outer surface 511 and the second inner surface 512. Each second limiting hole 514 is spaced apart from a peripheral edge of the second via hole 513, and the multiple second limiting holes 514 are defined at intervals from each other. Each second limiting hole 514 is used for one second positioning post 28 of the second lower plastic member 20 to pass through. In this embodiment, the positions, number, and shapes of the second limiting holes 514 are matched with the number and shapes of the second positioning posts 28, respectively. The second limiting hole 514 is a circular hole. The number of the second limiting holes 514 is two.

In this embodiment, the second transition portion 52 is a rectangular sheet. The second transition portion 52 has a second outer-side-surface 521, a second inner-side-surface 522, and a second guide face 523. The second guide face 523 is connected to the second inner-side-surface 522. The second guide face 523 and the second outer-side-surface 521 are positioned facing away from the second inner-side-surface 522, in the thickness direction (that is, the Y-axis direction) of the second transition portion 52. The second outer-side-surface 521 is connected to the second outer surface 511 of the second connecting portion 51. The second inner-side-surface 522 is connected to the second inner surface 512 of the second connecting portion 51.

The second transition portion 52 further has a second end-face 524 and two second side-surfaces 525. The two second side-surfaces 525 are positioned facing away from each other in the width direction of the second transition portion 52. Each of the second side-surfaces 525 is connected between the second outer-side-surface 521 and the second inner-side-surface 522. The second end-face 524 is connected to the second outer-side-surface 521, the second guide face 523, and the two second side-surfaces 525. The second end-face 524 is an end face of the second transition portion 52 away from the second connecting portion 51. In this embodiment, the second outer-side-surface 521 includes a welding region. The welding region is a region where a welding mark is generated when the tab and the second transition portion 52 are welded, and this region is actually determined according to the position where the tab and the second transition portion 52 are welded. Here, the definition of this region is given in advance for ease of description. The second inner-side-surface 522 is used for connection with the second side-heat-insulating-member 91. In the thickness direction of the second transition portion 52, the orthographic projection of the welding region is completely positioned in the second side-heat-insulating-member 91.

It can be understood that in the Z-axis direction, the second guide face 523 is farther away from the second connecting portion 51 than the second inner-side-surface 522. The second guide face 523 belongs to a part of the second inner-side-surface 522. In this embodiment, the second guide face 523 is an inclined surface. The second guide face 523 is inclined in the length direction of the second transition portion 52 towards the second outer-side-surface 521.

The second transition portion 52 further defines a second avoidance groove 54. The second avoidance groove 54 is recessed from the second guide face 523 and the second inner-side-surface 522, and is recessed towards the second outer-side-surface 521. It can be understood that a part of the second avoidance groove 54 is recessed from the second guide face 523, and the other part of the second avoidance groove 54 is recessed from the second inner-side-surface 522. The second avoidance groove 54 has three second groove-sidewalls 542 and a second groove-bottom-wall 541. In this embodiment, the second groove-bottom-wall 541 and the second inner-side-surface 522 have the same orientation. In other implementations, the second groove-bottom-wall 541 may be inclined. Each of the three second groove-sidewalls 542 is connected to an edge of the second groove-bottom-wall 541, the second inner-side-surface 522, and the second guide face 523. An edge of the second groove-bottom-wall 541 away from the second inner-side-surface 522 is connected to the second guide face 523. The second groove-bottom-wall 541 is arranged at an angle with the second guide face 523, and the second groove-bottom-wall 541 is arranged at an angle with each of the three second groove-sidewalls 542. The three second groove-sidewalls 542 are connected in sequence and arranged at an angle. Two of the three second groove-sidewalls 542 are positioned facing towards each other and spaced apart from each other in the length direction (i.e., the X-axis direction) of the second avoidance groove 54, and both of the two second groove-sidewalls 542 are connected to the second guide face 523 and the second inner-side-surface 522. The remaining one of the three second groove-sidewalls 542 is connected between the two second groove-sidewalls 542 and is connected to the second inner-side-surface 522.

In this embodiment, the second avoidance groove 54 is a trapezoidal groove. The second groove-bottom-wall 541 is a trapezoidal surface, and a long edge of the trapezoidal surface is closer to the second end-face 524 than a short edge of the trapezoidal surface. Both of the two second groove-sidewalls 542 in the length direction of the second avoidance groove 54 are trapezoidal, and in the length direction of the second transition portion 52, both of the two second groove-sidewalls 542 are inclined away from the second end-face 524. In the length direction of the second transition portion 52 and in the direction from the second end-face 524 towards the second connecting portion 51, a distance between the two opposite second groove-sidewalls 542 gradually decreases.

The second transition portion 52 further includes a second anti-slip groove 55. The second anti-slip groove 55 is recessed from the second side-surface 525 of the second transition portion 52 towards the interior of the second transition portion 52. The second anti-slip groove 55 extends through the second outer-side-surface 521 and the second inner-side-surface 522. It can be understood that the second anti-slip groove 55 has three openings, and the three openings are positioned on the second side-surface 525, the second outer-side-surface 521, and the second inner-side-surface 522, respectively. The second anti-slip groove 55 has a second wall-surface 551 and two second groove-surfaces 552. The second wall-surface 551 is arranged facing towards the opening on the second side-surface 525. Both of the two second groove-surfaces 552 are connected to the second wall-surface 551, the second outer-side-surface 521, the second inner-side-surface 522, and the second side-surface 525. Each of the two second groove-surfaces 552 is arranged at an angle with the second wall-surface 551, the second outer-side-surface 521, the second inner-side-surface, and the second side-surface 525.

In this embodiment, the second anti-slip groove 55 is an opening through groove that is substantially rectangular. The number of second anti-slip grooves 55 is multiple. In the width direction of the second transition portion 52, the number of second anti-slip grooves 55 defined on one side of the second transition portion 52 is equal to the number of second anti-slip grooves 55 defined on the other side of the second transition portion 52. The multiple second anti-slip grooves 55 defined on one side of the second transition portion 52 in the width direction of the second transition portion 52 are defined at intervals in the length direction of the second transition portion 52. The multiple second anti-slip grooves 55 defined on the other side of the second transition portion 52 in the width direction of the second transition portion 52 are defined at intervals in the length direction of the second transition portion 52. The multiple second anti-slip grooves 55 defined on each of both sides of the second transition portion 52 in the width direction of the second transition portion 52 are distributed at both opposite ends in the length direction of the second transition portion 52.

Exemplarily, the number of the second anti-slip grooves 55 is eight. Four second anti-slip grooves 55 are positioned at one side of the second transition portion 52 in the width direction of the second transition portion 52, and the four second anti-slip grooves 55 are respectively positioned at opposite ends of the second side-surface 525 in the length direction of the second side-surface 525. The other four second anti-slip grooves 55 are positioned at the other side of the second transition portion 52 in the width direction of the second transition portion 52, and the other four second anti-slip grooves 55 are respectively positioned at opposite ends of the second side-surface 525 in the length direction of the second side-surface 525. In an implementation, the multiple second anti-slip grooves 55 are symmetrical about a central axis extending in the width direction of the second transition portion 52, so as to ensure the stability of force when in contact with the second heat insulating member 90.

The second bending portion 53 has a second outer-curved-surface 531 and a second inner-curved-surface 532. The second outer-curved-surface 531 and the second inner-curved-surface 532 are positioned facing away from each other in the thickness direction of the second bending portion 53. The second outer-curved-surface 531 is connected between the second outer surface 511 and the second outer-side-surface 521. The second inner-curved-surface 532 is connected between the second inner surface 512 and the second inner-side-surface 522.

In this embodiment, in the width direction of the connector, the depth of each of the first anti-slip groove 45 and the second anti-slip groove 55 is greater than or equal to 0.05 mm and less than or equal to 3 mm. Therefore, the depth of each of the first anti-slip groove 45 and the second anti-slip groove 55 is avoided from being too shallow, so that the performance of the battery is avoided from being affected. If the depth of each of the first anti-slip groove 45 and the second anti-slip groove 55 is too shallow, metal burrs are easily formed when the anti-slip groove is defined. In addition, the depth of each of the first anti-slip groove 45 and the second anti-slip groove 55 is avoided from being too deep. If the depth of each of the first anti-slip groove 45 and the second anti-slip groove 55 is too deep, the overcurrent capability can be affected, and the heat can be accumulated to cause obvious heat generation, resulting in a reduction in the energy efficiency of the battery.

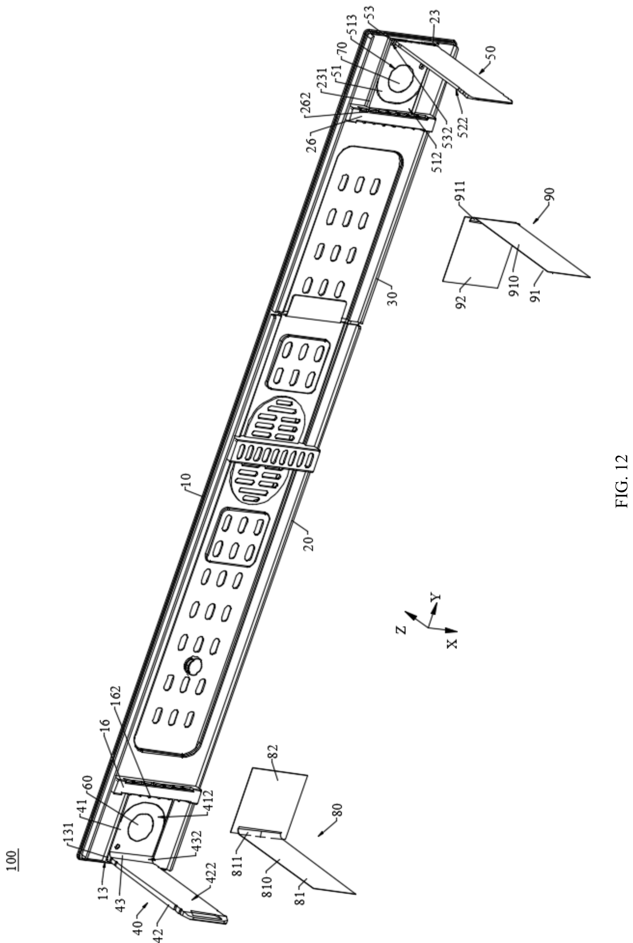

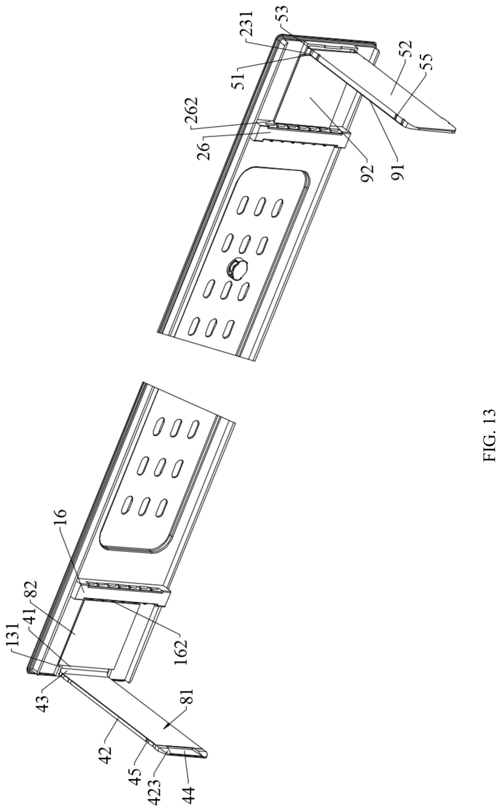

Reference can be made to FIG. 3, FIG. 12, and FIG. 13 together, where FIG. 12 is an exploded schematic structural view of some structures in an end cover assembly illustrated in FIG. 3, and FIG. 13 is a schematic structural view in which a first heat insulating member is connected to a first connector and a lower plastic member and an end cover, and a second heat insulating member is connected to a second connector and the lower plastic member and the end cover illustrated in FIG. 12.

In this embodiment, the first connector 40 is mounted at the first lower plastic member 10. The first connecting portion 41 of the first connector 40 is accommodated in the first assembling groove 15 of the first lower plastic member 10. The first outer surface 411 of the first connecting portion 41 is connected to the first groove-bottom-face 151 of the first assembling groove 15. The two first positioning posts 18 respectively pass through the two first limiting holes 414 of the first connecting portion 41, to limit and fix the first connector 40 on the first lower plastic member 10. The first via hole 413 of the first connecting portion 41 is coaxial with the first through-hole 17 of the first lower plastic member 10. In the Y-axis direction, the first inner-side-surface 422 of the first transition portion 42 is positioned facing towards and spaced apart from the first protrusion 16. The first transition portion 42 extends in a direction away from the first lower plastic member 10.

The second connector 50 is mounted at the second lower plastic member 20. The second connecting portion 51 of the second connector 50 is accommodated in the second assembling groove 25 of the second lower plastic member 20. The second outer surface 511 of the second connecting portion 51 is connected to the second groove-bottom-face 251 of the second assembling groove 25. The two second positioning posts 28 respectively pass through the two second limiting holes 514 of the second connecting portion 51, to limit and fix the second connector 50 on the second lower plastic member 20. The second via hole 513 of the second connecting portion 51 is coaxial with the second through-hole 27 of the second lower plastic member 20. In the Y-axis direction, the second inner-side-surface 522 of the second transition portion 52 is positioned facing towards and spaced apart from the second protrusion 26. The second transition portion 52 extends in a direction away from the second lower plastic member 20.

The first lower plastic member 10 is positioned at one end of the second lower plastic member 20 away from the second boss 23. One end of the first lower plastic member 10 away from the first boss 13 is connected to the end of the second lower plastic member 20 away from the second boss 23. The first top-face 111 of the first lower plastic member 10 and the second top-face 211 of the second lower plastic member 20 have the same orientation and are both connected to the lower surface 32 of the end cover 30. The first raised portion 12 of the first lower plastic member 10 and the second raised portion 22 of the second lower plastic member 20 are both accommodated in the recess 35 of the end cover 30, so that the first lower plastic member 10 and the second lower plastic member 20 are assembled and positioned on the end cover 30, and the first lower plastic member 10 and the second lower plastic member 20 are avoided from being displaced relative to the end cover 30, thereby avoiding affecting the reliability of the energy storage apparatus 1000.

The first through-hole 17 of the first lower plastic member 10 is coaxial with the first terminal-post through-hole 33 of the end cover 30. That is, the first via hole 413 of the first connector 40 is coaxial with the first terminal-post through-hole 33. The first terminal-post 60 passes through the first terminal-post through-hole 33, the first through-hole 17, and the first via hole 413 in sequence. The peripheral side of the first terminal-post 60 abuts with the hole wall of the first via hole 413. The first terminal-post 60 and the first connecting portion 41 are fixed by laser welding, to realize electrical conduction between the first terminal-post 60 and the first connector 40. The first terminal-post 60 and the end cover 30 are insulated and sealed by a seal (not shown), which not only avoids a short circuit between the first terminal-post 60 and the end cover 30, but also avoids the electrolyte inside the energy storage apparatus 1000 from flowing out of the energy storage apparatus 1000.

The second through-hole 27 of the second lower plastic member 20 is coaxial with the second terminal-post through-hole 34 of the end cover 30. That is, the second via hole 513 of the second connector 50 is coaxial with the second terminal-post through-hole 34. The second terminal-post 70 passes through the second terminal-post through-hole 34, the second through-hole 27, and the second via hole 513 in sequence. The peripheral side of the second terminal-post 70 abuts against the hole wall of the second via hole 513. The second terminal-post 70 and the second connecting portion 51 are fixed by laser welding, to realize electrical conduction between the second terminal-post 70 and the second connector 50. The second terminal-post 70 is insulated and sealed from the end cover 30 by a seal (not shown), which not only avoids a short circuit between the second terminal-post 70 and the end cover 30, but also avoids the electrolyte inside the energy storage apparatus 1000 from flowing out of the energy storage apparatus 1000.

It can be explained that the first body 11 of the first lower plastic member 10 and the second body 21 of the second lower plastic member 20 are connected to form a body of the lower plastic member. The first top-face 111 of the first lower plastic member 10 and the second top-face 211 of the second lower plastic member 20 form a top face of the lower plastic member. The first bottom-face 112 of the first lower plastic member 10 and the second bottom-face 212 of the second lower plastic member 20 form a bottom face of the lower plastic member.

As illustrated in FIG. 13, the first heat insulating member 80 covers the first connector 40 at one side of the first connector 40 positioned facing away from the first lower plastic member 10. The first end-heat-insulating-member 82 covers and is adhered to the first inner surface 412 of the first connecting portion 41. The first end-heat-insulating-member is configured to isolate the first connecting portion 41 from the electrode-assembly body 310. In this embodiment, the first side-heat-insulating-member 81 is connected to the first end-heat-insulating-member 82. The first side-heat-insulating-member 81 may cover the first inner-side-surface 422 of the first transition portion 42 and the first inner-curved-surface 432 of the first bending portion 43, and may also cover a part of the first inner surface 412 of the first connecting portion 41 connected to the first inner-curved-surface 432. The first side-heat-insulating-member 81 is configured to isolate the first transition portion 42 and the first bending portion 43 from the electrode-assembly body 310. The first side-heat-insulating-member 81 avoids the first avoidance groove 44, to avoid interference with a welding fixture during welding of the tab and the connector.

In this embodiment, the first side-heat-insulating-member 81 is partitioned into a first part 810 and a second part 811. The second part 811 may cover the first inner-curved-surface 432 of the first bending portion 43, and may also cover a part of the first inner surface 412 of the first connecting portion 41 that is connected to the first inner-curved-surface 432. That is, the second part 811 of the first side-heat-insulating-member 81 overlaps a part of the first end-heat-insulating-member 82 close to the first side-heat-insulating-member 81. The second part 811 without the adhesive layer covers the first bending portion 43 of the first connector 40, so that wrinkling of the first side-heat-insulating-member 81 at the first bending portion 43 due to poor attachment effect of the adhesive layer can be avoided. Meanwhile, the first part 810 has an adhesive layer, so that the fixing strength of the first side-heat-insulating-member 81 on the first connector 40 can be ensured.

In addition, the second part 811 is lap-jointed with the first end-heat-insulating-member 82. An overlapping region of the second part 811 and the first end-heat-insulating-member 82 may be positioned on the first inner surface 412 of the first connecting portion 41. Therefore, the second part 811 can be prevented from being displaced and wrinkled when the first end-heat-insulating-member 82 is attached after the second part 811 is attached, thereby preventing affecting the attachment effect of the second part 811. It can be understood that the first end-heat-insulating-member 82 and the first side-heat-insulating-member 81 partially overlap and have an overlapping region. The overlapping region is positioned within the first connecting portion 41. The overlapping region can be regarded as a thickened region of the first heat insulating member 80, so as to increase the adhesion reliability between the first heat insulating member 80 and the first connector 40, and meanwhile, the heat conduction from the first connector 40 towards the electrode-assembly body 310 can be better blocked.

After the end cover assembly is assembled with the electrode assembly, the first protrusion 16 abuts against the electrode assembly. In the length direction of the end cover assembly, a part of an orthographic projection of the first side-heat-insulating-member 81 is positioned on the first protrusion-side-surface 162 of the first protrusion 16. The part of the orthographic projection of the first side-heat-insulating-member 81 may cover a part of or all of the first protrusion-side-surface 162. It can also be understood that in the length direction of the first transition portion 42, an orthographic projection of the first protrusion 16 falls within the second part 811 of the first side-heat-insulating-member 81. After the first connector 40 and the tab are welded, the second part 811 of the first side-heat-insulating-member 81 can effectively block the high temperature generated when the first connector 40 and the first tab are welded, thereby preventing heat from being transmitted to the first protrusion 16, and reducing the impact of heat on the electrode assembly during welding.

In the Y-axis direction, the first side-heat-insulating-member 81 covers the first inner-side-surface 422 of the first transition portion 42 and avoids the first avoidance groove 44. A projection of the first anti-slip groove 45 is at least partially positioned within the projection of the first side-heat-insulating-member 81. That is, the first side-heat-insulating-member 81 may cover a part of the opening of the first anti-slip groove 45 defined on the first inner-side-surface 422 and cover a part of the groove bottom-wall of the first anti-slip groove 45, or may completely cover the opening of the first anti-slip groove 45 defined on the first inner-side-surface 422. When the adhesion of the first side-heat-insulating-member 81 to the first transition portion 42 is poor, the first anti-slip groove 45 may serve as a force application point, to facilitate the removal of the first side-heat-insulating-member 81 or even the entire first heat insulating member 80 to rework. In this embodiment, the grooves on both sides of the first transition portion 42 are symmetrically defined and positioned at the end positions.

In this embodiment, in the Z-axis direction, the first end-heat-insulating-member 82 completely covers the first connecting portion 41 and the first terminal-post 60 that are positioned in the first assembling groove 15. The first end-heat-insulating-member 82 is configured to isolate the first connecting portion 41 and the first terminal-post 60 from the electrode-assembly body 310. In the Z-axis direction, the projection of the first connecting portion 41 and the projection of the first terminal-post 60 are completely positioned within the projection of the first end-heat-insulating-member 82. The first end-heat-insulating-member 82 at least partially covers the first boss-face 131, thereby increasing the coverage area of the first end-heat-insulating-member 82, reducing the instability of the first end-heat-insulating-member 82 when the first end-heat-insulating-member 82 is impacted by the electrolyte, and improving the attachment effect of the first end-heat-insulating-member 82 and the stability of long-term use of the first end-heat-insulating-member 82.

In addition, the first end-heat-insulating-member 82 abuts against the first protrusion-side-surface 162 of the first protrusion 16 at an edge of the first end-heat-insulating-member 82 away from the first side-heat-insulating-member 81. Therefore, not only is the coverage area of the first end-heat-insulating-member 82 increased, but also the first protrusion-side-surface 162 functions as a limit to the first end-heat-insulating-member 82, thereby improving the adhesion rate of the first end-heat-insulating-member 82.

The second heat insulating member 90 covers the second connector 50 at one side of the second connector 50 positioned facing away from the second lower plastic member 20. The second end-heat-insulating-member 92 covers the second inner surface 512 of the second connecting portion 51. The second end-heat-insulating-member 92 is configured to isolate the second connecting portion 51 from the electrode-assembly body 310. The second side-heat-insulating-member 91 covers the second inner-side-surface 522 of the second transition portion 52, the second inner-curved-surface 532 of the second bending portion 53, and the second inner surface 512 of the second connecting portion 51. The second side-heat-insulating-member 91 is configured to isolate the second transition portion 52 and the second bending portion 53 from the electrode-assembly body 310. The second side-heat-insulating-member 91 avoids the second avoidance groove 54.

In this embodiment, the second side-heat-insulating-member 91 is partitioned into a third part 910 and a fourth part 911. The fourth part 911 may cover the second inner-curved-surface 532 of the second bending portion 53, and may also cover a part of the second inner surface 512 of the second connecting portion 51 that is connected to the second inner-curved-surface 532. That is, the fourth part 911 of the second side-heat-insulating-member 91 overlaps a part of the second end-heat-insulating-member 92 close to the second side-heat-insulating-member 91. The fourth part 911 without the adhesive layer covers the second bending portion 53, so that wrinkling of the second side-heat-insulating-member 91 at the second bending portion 53 due to the poor adhesion effect of the adhesive layer can be avoided. Meanwhile, the third part 910 has an adhesive layer, so that the fixing strength of the second side-heat-insulating-member 91 on the second connector 50 can be ensured.

In addition, the fourth part 911 is lap-jointed with the second end-heat-insulating-member 92. An overlapping region of the fourth part 911 and the second end-heat-insulating-member 92 may be positioned on the second inner surface 512 of the second connecting portion 51. Therefore, the fourth part 911 can be prevented from being displaced and wrinkled when the second end-heat-insulating-member 92 is attached after the fourth part 911 is attached, thereby preventing affecting the attachment effect of the fourth part 911. The second end-heat-insulating-member 92 and the second side-heat-insulating-member 91 partially overlap and have an overlapping region. The overlapping region is positioned within the second connecting portion 51. The overlapping region can be regarded as a thickened region of the second heat insulating member 90, so as to increase the adhesion reliability between the second heat insulating member 90 and the second connector 50, and meanwhile, the heat conduction from the second connector 50 towards the electrode-assembly body 310 can be better blocked.

After the end cover assembly is assembled with the electrode assembly, in the length direction of the end cover assembly, a part of an orthographic projection of the second side-heat-insulating-member 91 is positioned on the second protrusion-side-surface 262 of the second protrusion 26. The part of the orthographic projection of the second side-heat-insulating-member 91 may cover a part of or all of the second protrusion-side-surface 262. It can also be understood that in the length direction of the second transition portion 52, an orthographic projection of the second protrusion 26 falls within the fourth part 911 of the second side-heat-insulating-member 91. After the second connector 50 and the tab are welded, the fourth part 911 of the second side-heat-insulating-member 91 can effectively block the high temperature generated when the second connector 50 and the second tab are welded, thereby preventing heat from being transmitted to the second protrusion 26, and reducing the impact of heat on the electrode assembly during welding.

In the Y-axis direction, the second side-heat-insulating-member 91 covers the second transition portion 52, and a projection of each of the multiple second anti-slip grooves 55 on the second transition portion 52 is at least partially positioned within the projection of the second side-heat-insulating-member 91. That is, the second side-heat-insulating-member 91 may cover a part of the opening of the second anti-slip groove 55 defined on the second inner-side-surface 522, or may completely cover the opening of the second anti-slip groove 55 on the second inner-side-surface 522. When the adhesion of the second side-heat-insulating-member 91 to the second transition portion 52 is poor, the second anti-slip groove 55 may serve as a force application point, to facilitate the removal of the second side-heat-insulating-member 91 or even the entire second heat insulating member 90 to rework.

In this embodiment, in the Z-axis direction, the second end-heat-insulating-member 92 completely covers the second connecting portion 51 and the second terminal-post 70, and may cover a part of or all of the second boss-face 231 of the second boss 23. The second end-heat-insulating-member 92 is configured to isolate the second connecting portion 51 and the second terminal-post 70 from the electrode-assembly body 310, and is also configured to completely isolate the second boss 23 connected around the second connecting portion 51 from the electrode-assembly body 310. That is, in the Z-axis direction, each of the projection of the second connecting portion 51, the projection of the second terminal-post 70, and the projection of the second boss 23 is completely positioned within the projection of the second end-heat-insulating-member 92. Therefore, the coverage area of the second end-heat-insulating-member 92 can be increased, the instability of the second end-heat-insulating-member 92 when the second end-heat-insulating-member 92 is impacted by the electrolyte can be reduced, and the attachment effect of the second end-heat-insulating-member 92 and the stability of the second end-heat-insulating-member 92 during long-term use of the second end-heat-insulating-member 92 can be improved.

In addition, the second end-heat-insulating-member 92 abuts against the second protrusion-side-surface 262 of the second protrusion 26 at an edge of the second end-heat-insulating-member 92 away from the second side-heat-insulating-member 91. Therefore, not only is the coverage area of the second end-heat-insulating-member 92 increased, but the second protrusion-side-surface 262 functions as a limit to the second end-heat-insulating-member 92, thereby improving the adhesion rate of the second end-heat-insulating-member 92.

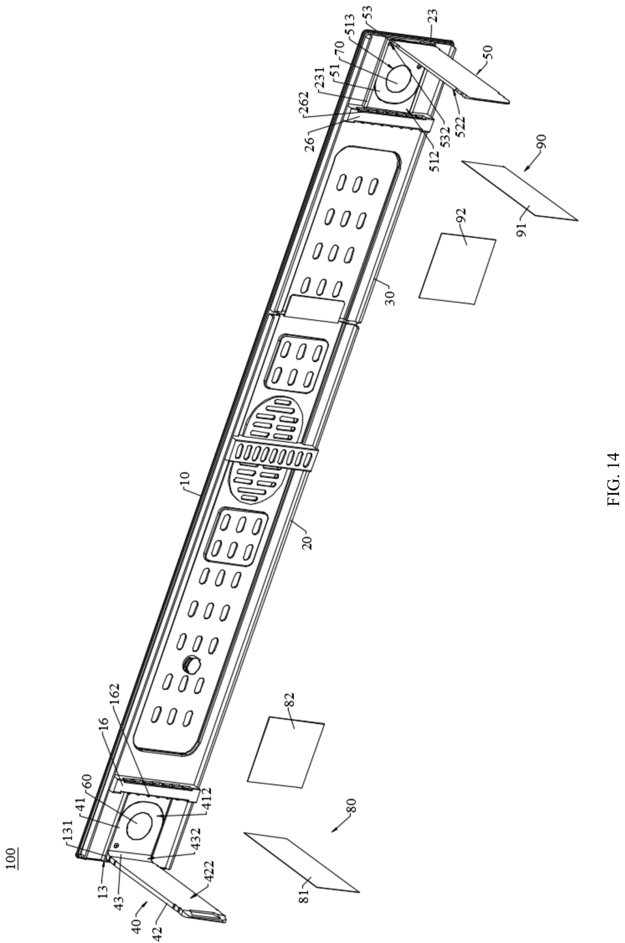

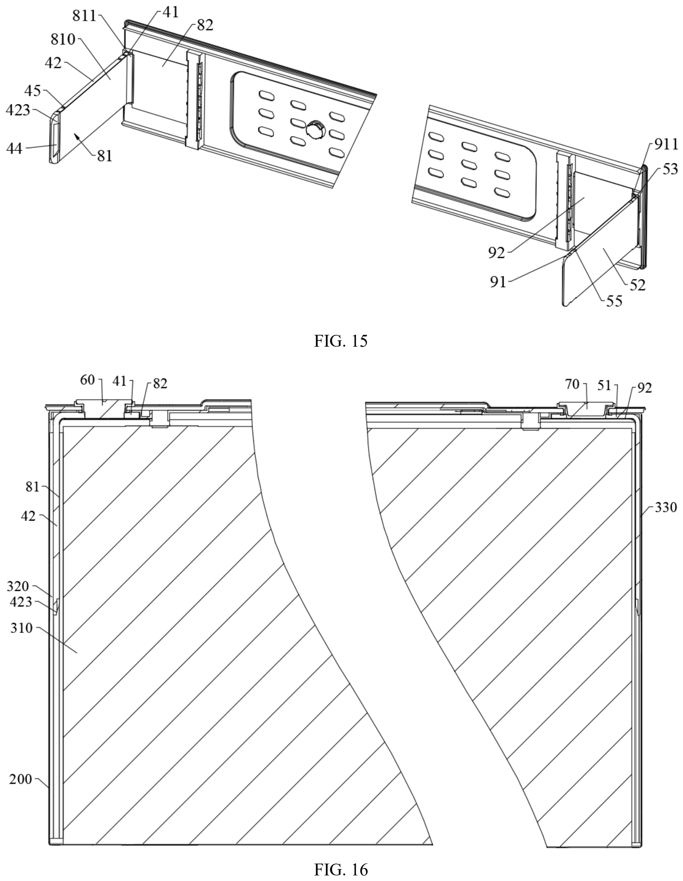

Reference can be made to FIG. 14 and FIG. 15, where FIG. 14 is an exploded schematic structural view of some structures in an end cover assembly of the energy storage apparatus illustrated in FIG. 2 of another embodiment, and FIG. 15 is a schematic structural view in which a first heat insulating member is connected to a first connector and a lower plastic member and an end cover, and a second heat insulating member is connected to a second connector and the lower plastic member and the end cover illustrated in FIG. 14.

This embodiment is different from the above embodiment in that the first side-heat-insulating-member 81 is spaced apart from the first end-heat-insulating-member 82. The first side-heat-insulating-member 81 is positioned on the first transition portion 42. The first end-heat-insulating-member 82 is positioned on the first connection 41. The first side-heat-insulating-member 81 covers and is adhered to the first inner-side-surface 422. The first end-heat-insulating-member 82 covers and is adhered to the first inner surface 412. The first bending portion 43 between the first side-heat-insulating-member 81 and the first end-heat-insulating-member 82 is exposed. The connection relationship between the first connector 40 and each of the first side-heat-insulating-member 81 and the first end-heat-insulating-member 82 at other positions of the first connector 40 can be referred to the above embodiment, and will not be repeated here.

The second side-heat-insulating-member 91 is spaced apart from the second end-heat-insulating-member 92. The second side-heat-insulating-member 91 is positioned on the second transition portion 52. The second end heat insulation 92 is positioned on the second connection 51. It can be understood that the second side-heat-insulating-member 91 only covers the second inner-side-surface 522 of the second transition portion 52, and the second end-heat-insulating-member 92 covers the second inner surface 512. The second bending portion 53 between the second side-heat-insulating-member 91 and the second end-heat-insulating-member 92 is exposed. The connection relationship between the second connector 50 and each of the second side-heat-insulating-member 91 and the second end-heat-insulating-member 92 at other positions of the second connector 50 can be referred to the above embodiment, and will not be repeated here.

Reference can be made to FIG. 3 and FIG. 16, where FIG. 16 is a cross-sectional view of an assembly view of the end cover assembly illustrated in FIG. 12, an electrode assembly, and a housing. The end cover assembly 100 is mounted on the electrode assembly 300. The bottom face of the lower plastic member is positioned facing towards the top surface of the electrode-assembly body 310. The first protrusion 16 and the second protrusion 26 abut against the electrode-assembly body 310. The first connector 40 and the second connector 50 are respectively positioned at two opposite sides of the electrode-assembly body 310. The first connector 40 is inserted between two first tabs 320 and the side surface of the electrode assembly. The two first tabs 320 are bent towards each other and are connected to the first connector 40 by welding. The first transition portion 42 has the first guide face 423, which is beneficial for the first connector 40 to be inserted between the two bare electrode assembly tabs and prevents the inner side of the first connector 40 from scratching the bare electrode assembly. The first side-heat-insulating-member 81 and the first end-heat-insulating-member 82 are positioned between the electrode-assembly body 310 and both the first connector 40 and a part of the first lower plastic member 10, to prevent the first connector 40 and the electrode-assembly body 310 from contacting and prevent causing short circuit. The second connector 50 is inserted between two second tabs 330. The two second tabs 330 are bent towards each other and are connected to the second connector 50 by welding. The second side-heat-insulating-member 91 and the second end-heat-insulating-member 92 are positioned between the electrode-assembly body 310 and both the second connector 50 and a part of the second lower plastic member 20, to prevent the second connector 50 and the electrode-assembly body 310 from contacting and prevent causing short circuit.

Specifically, the first side-heat-insulating-member 81 and the first end-heat-insulating-member 82 are positioned facing towards the electrode-assembly body 310. The two first tabs 320 are led out from first side-surfaces of two electrode-assembly bodies 310, respectively, and are provided opposite to and spaced part from each other in the X-axis direction. The two first tabs 320 extend in the Y-axis direction to one side of the first transition portion 42 positioned facing away from the electrode-assembly body 310. The two first tabs 320 are bent towards each other in the X-axis direction, and wrap around the first transition portion 42. Both of the two first tabs 320 are welded to the first outer-side-surface 421 of the first transition portion 42, to achieve electrical conduction between the two first tabs 320 and the first connector 40. A position of the welding mark generated by welding between the first transition portion 42 and the two first tabs 320 is positioned in the welding region. The first transition portion 42 and the two first tabs 320 are connected by welding, so that a large amount of heat is generated. The first transition portion 42 is isolated from the electrode-assembly body 310 by the first side-heat-insulating-member 81, to effectively block heat transfer between the first transition portion 42 and the electrode-assembly body 310 and ensure the performance of the electrode-assembly body 310. An orthographic projection of the welding mark generated by the welding of the first transition portion 42 and the two first tabs 320 in the length direction of the end cover assembly is completely positioned within the first side-heat-insulating-member 81, so that the first side-heat-insulating-member 81 can effectively block the heat generated by the welding of the first transition portion 42 and the two first tabs 320.

The first transition portion 42 defines the first anti-slip groove 45 on the first side-surface 425 of the first transition portion 42. When the first tab 320 extends and is bent to the side of the first transition portion 42 positioned facing away from the electrode-assembly body 310, the first anti-slip groove 45 can increase the friction between the first tab 320 and the first transition portion 42 to a certain extent, thereby reducing the sliding of the first tab 320 in the length direction of the first transition portion 42. Therefore, inaccurate welding positioning with the first transition portion 42 caused by the sliding of the first tab 320 relative to the first transition portion 42 can be avoided, thereby improving the welding yield of the first tab 320 and the first transition portion 42. Meanwhile, after the end cover assembly 100 and the electrode assembly 300 are assembled into the housing 200, the connection stability between the first tab 320 and the first transition portion 42 is also improved, thereby avoiding the first connector 40 from pulling and tearing the first tab 320.

In this embodiment, multiple first anti-slip grooves 45 are defined at both sides of the first transition portion 42. Projections of some of the multiple first anti-slip grooves 45 fall on the first tab 320 in the length direction of the energy storage apparatus 1000. Meanwhile, in the process of bending the first tab 320 to the transition portion of the first connector 40, a part of the first side-heat-insulating-member 81 is inclined towards the first anti-slip groove 45 of the first transition portion 42, so as to prevent the first anti-slip groove 45 from scratching the tab. In addition, since the first anti-slip groove 45 is positioned at both ends of the first transition portion, the region of the first anti-slip groove 45 in contact with the first tab is positioned at both sides of the connection region of the first tab and the first connector. Therefore, even if the first anti-slip groove 45 and the tab film material are slightly damaged, the current conduction from the first tab to the first connector is not affected.

The first avoidance groove 44 is defined on an end of the first transition portion 42 away from the first transition portion, so that the end of the first transition portion 42 has a certain thickness difference, and the deformation stress generated by high temperature when the first transition portion 42 and the first tab 320 are welded is effectively and slowly released. Therefore, the first transition portion 42 is avoided from being deformed and pulling the two first tabs 320 connected to the first transition portion 42, and the two first tabs 320 are avoided from being broken, thereby avoiding the risk of current interruption between the electrode assembly 300 and the first connector 40, and further improving the yield and safety performance of the energy storage apparatus 1000. The tab (including the first tab and the second tab) is connected to the outer surface of the connector (including the first connector and the second connector). During the welding of the tab and the connector, and the assembly fixture is inserted from the end to align with the avoidance groove, thereby providing the support force for the connector from the inner surface to the outer surface. Therefore, the deformation of the first transition portion caused by the application of welding force from the outside of the first transition portion 42 during welding is avoided, and thus the damage to the electrode-assembly body at the inner side of the first transition portion 42 is avoided. Meanwhile, due to the provision of the avoidance groove, the fixture can be made to match the size of the avoidance groove, thereby achieving better positioning and allowing smooth insertion of the fixture, which improves the welding accuracy between the tab and the connector. The assembly fixture is inserted from the end of the first transition portion away from the first bending portion, and extends in the length direction of the first transition portion into the avoidance groove. The avoidance groove is a trapezoidal groove, so that the fixture can better extend into the avoidance groove. In addition, by defining the first avoidance groove 44 on the first connector 40, the utilization rate of the internal space of the energy storage apparatus 1000 and the energy density of the energy storage apparatus 1000 can be improved without increasing the volume of the first connector 40.

The first inner surface 412 of the first connecting portion 41 is positioned facing towards the top surface of the electrode-assembly body 310, and the first connecting portion 41 is isolated from the electrode-assembly body 310 by the first end-heat-insulating-member 82. The first end-heat-insulating-member 82 can block heat conduction between the first connecting portion 41 and the electrode-assembly body 310, and protect the performance of the electrode-assembly body 310. In addition, a part of the first lower plastic member 10 is isolated from the electrode-assembly body 310 by the first end-heat-insulating-member 82, and the first end-heat-insulating-member 82 can also block heat conduction between the part of the first lower plastic member 10 and the electrode-assembly body 310, so as to avoid the influence of high temperature on the electrode assembly 300.

The two second tabs 330 are led out from second side surfaces of the two electrode-assembly bodies 310, respectively, and are provided opposite to and spaced apart from each other in the X-axis direction. The second transition portion 52 is inserted between the two second tabs 330 and the side surface of the electrode assembly. The two second tabs 330 extend in the Y-axis direction to one side of the second transition portion 52 positioned facing away from the electrode-assembly body 310. The two second tabs 330 are bent towards each other in the X-axis direction, and wrap around the second transition portion 52. Both of the two second tabs 330 are welded to the second outer-side-surface 521 of the second transition portion 52, to achieve electrical conduction between the two second tabs 330 and the second connector 50.

A position of the welding mark generated by welding between the second transition portion 52 and the two second tabs 330 is positioned in the welding region. The second transition portion 52 and the two second tabs 330 are connected by welding, so that a large amount of heat is generated. The second transition portion 52 is isolated from the electrode-assembly body 310 by the second side-heat-insulating-member 91, to effectively block heat transfer between the second transition portion 52 and the electrode-assembly body 310 and ensure the performance of the electrode-assembly body 310. An orthographic projection of the welding mark generated by the welding of the second transition portion 52 and the two second tabs 330 in the length direction of the end cover assembly is completely positioned within the second side-heat-insulating-member 91, so that the second side-heat-insulating-member 91 can effectively block the heat generated by the second transition portion 52 and the two second tabs 330 during welding.

The second transition portion 52 defines the second anti-slip groove 55 on the second side surface 525 of the second transition portion 52. When the second tab 330 extends and is bent to the side of the second transition portion 52 positioned facing away from the electrode-assembly body 310, the second anti-slip groove 55 can increase the friction between the second tab 330 and the second transition portion 52 to a certain extent, thereby reducing the sliding of the second tab 330 in the length direction of the second transition portion 52. Therefore, inaccurate welding positioning with the second transition portion 52 caused by the sliding of the second tab 330 relative to the second transition portion 52 can be avoided, thereby improving the welding yield of the second tab 330 and the second transition portion 52. Meanwhile, after the subsequent end cover assembly 100 and the electrode assembly 300 are assembled into the housing 200, the connection stability between the second tab 330 and the second connector 50 is also improved, thereby avoiding the second connector 50 from pulling and tearing the second tab 330. In this embodiment, a projection of the second anti-slip groove 55 in the length direction of the energy storage apparatus 1000 at least partially falls on the second tab 330.

The second avoidance groove 54 is defined on an end of the second transition portion 52 away from the second transition portion, so that the end of the second transition portion 52 has a certain thickness difference, and the deformation stress generated by high temperature when the second transition portion 52 and the second tab 330 are welded is effectively and slowly released. Therefore, the second transition portion 52 is avoided from being deformed and pulling the two second tabs 330 connected to the second transition portion 52, and the two second tabs 330 are avoided from being broken, thereby avoiding the risk of current circuit interruption between the electrode assembly 300 and the second connector 50, and further improving the yield and safety performance of the energy storage apparatus 1000. In addition, the second avoidance groove 54 enables more accurate positioning of the assembly fixture relative to the second transition portion 52, thereby improving the assembly efficiency of the energy storage apparatus 1000. Moreover, by defining the second avoidance groove 54 on the second connector 50, the utilization rate of the internal space of the energy storage apparatus 1000 and the energy density of the energy storage apparatus 1000 can be improved without increasing the volume of the second connector 50.

The second inner surface 512 of the second connecting portion 51 is positioned facing towards the top surface of the electrode-assembly body 310, and the second connecting portion 51 is isolated from the electrode-assembly body 310 by the second end-heat-insulating-member 92. The second end-heat-insulating-member 92 can block heat conduction between the second connecting portion 51 and the electrode-assembly body 310, and protect the performance of the electrode-assembly body 310. In addition, a part of the second lower plastic member 20 is isolated from the electrode-assembly body 310 by the second end-heat-insulating-member 92, and the second end-heat-insulating-member 92 can also block the heat conduction between the part of the second lower plastic member 20 and the electrode-assembly body 310, so as to avoid the influence of high temperature on the electrode assembly 300.

As illustrated in FIG. 2 and FIG. 3, the end cover assembly 100 and the electrode assembly 300 are assembled into the housing 200. An edge of the end cover 30 and an edge of the opening 201 of the housing 200 are connected by welding or bonding, to seal the energy storage apparatus 1000.

In embodiments of the present disclosure, the orthographic projection of the welding region of the connector (first connector 40 and second connector 50) and the tab (first tab and second tab) in the length direction of the energy storage apparatus completely falls on the side heat-insulating-member (first side-heat-insulating-member 81 and second side-heat-insulating-member 91) of the heat insulating member (first heat insulating member and second heat insulating member). The side heat-insulating-member can isolate the connector from the electrode-assembly body, so as to prevent the high temperature generated when the connector and the tab are welded from affecting the electrode assembly through the connector transition portion. Meanwhile, the end heat-insulating-member (first heat-insulating-member 82 and second heat-insulating-member 92) covers the connecting portion (first connecting portion 41 and second connecting portion 51) of the connector. Therefore, during battery abuse, such as overcharge or thermal runaway test, the high temperature of the terminal post (first terminal-post and second terminal-post) is prevented from being conducted to the connecting portion of the connector, thereby avoiding affecting the electrode assembly through the connecting portion of the connector. The projection of the side heat-insulating-member in the length direction at least partially falls on the protrusion side surface of the protrusion (first protrusion 16 and second protrusion 26) of the lower plastic member, which can effectively block the high temperature generated when the connector and the tab are welded, and ensure that the heat affects the electrode assembly less during welding.

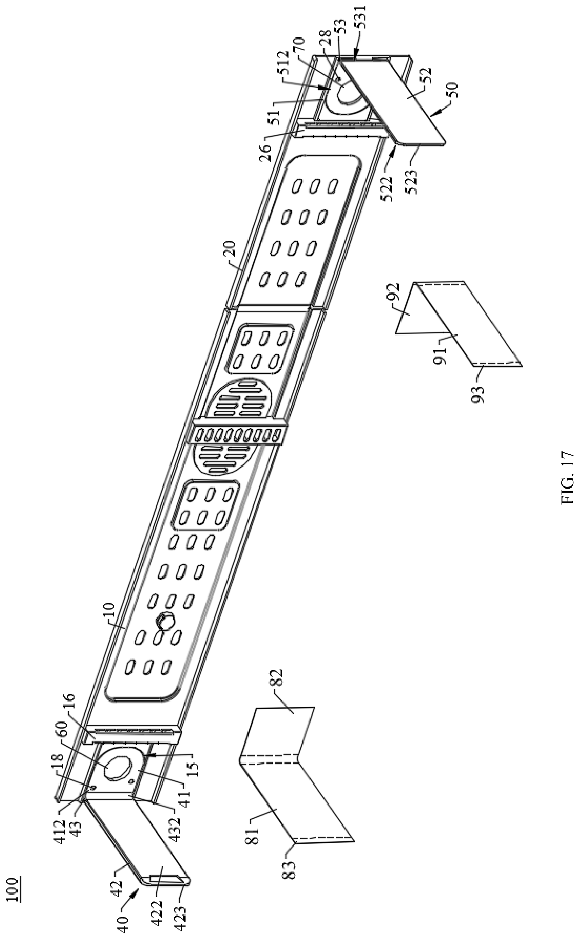

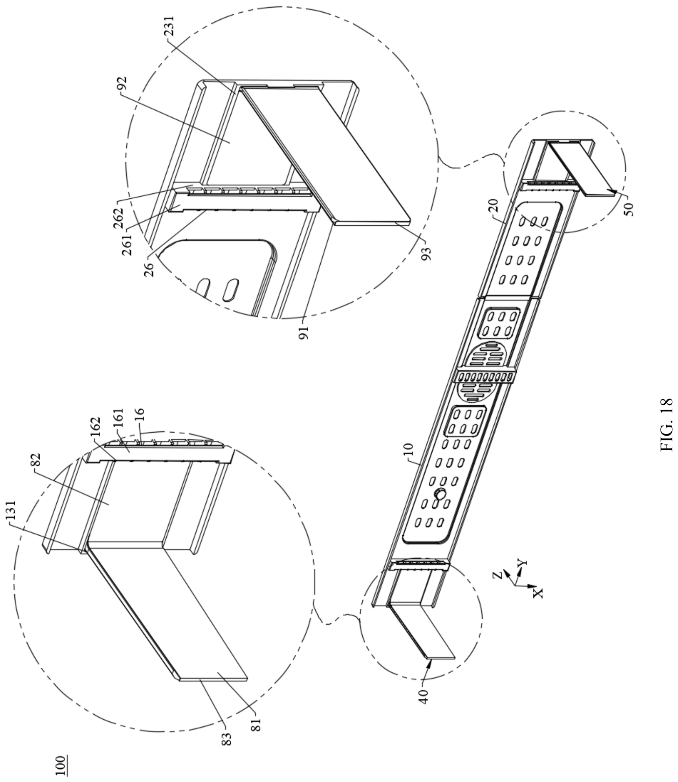

Reference can be made to FIG. 17 and FIG. 18, where FIG. 17 is an exploded schematic structural view of some structures in an end cover assembly of the energy storage apparatus illustrated in FIG. 2 of another embodiment, and FIG. 18 is a schematic structural view in which a first heat insulating member is connected to a first connector and a lower plastic member and an end cover, and a second heat insulating member is connected to a second connector and the lower plastic member and the end cover illustrated in FIG. 17. Different from the end cover assembly illustrated in FIG. 12, in this embodiment, the first heat insulating member 80 and the second heat insulating member 90 are of an integral structure. The first connector 40 and the second connector 50 may not define an anti-slip groove. Of course, the structure of the first connector 40 and the structure of the second connector 50 may be the same as the structure of the above embodiment.

The first heat insulating member 80 includes the first side-heat-insulating-member 81, the first end-heat-insulating-member 82, and the first tail-heat-insulating-member 83. The first side-heat-insulating-member 81, the first end-heat-insulating-member 82, and the first tail-heat-insulating-member 83 are connected in sequence. Alternatively, the first side-heat-insulating-member 81 and the first end-heat-insulating-member 82 partially overlap and form a thickened region, and the thickened region is used for covering the first bending portion 43. The second heat insulating member 90 includes the second side-heat-insulating-member 91, the second end-heat-insulating-member 92, and the second tail-heat-insulating-member 93. The second side-heat-insulating-member 91, the second end-heat-insulating-member 92, and the second tail-heat-insulating-member 93 are connected in sequence. Alternatively, the second side-heat-insulating-member 91 and the second end-heat-insulating-member 92 partially overlap and form a thickened region, and the thickened region is used for covering the second bending portion 53.

The first side-heat-insulating-member 81, the first end-heat-insulating-member 82, and the first tail insulation member 83 cover the first connector 40 and the part of the first lower plastic member 10. The second side-heat-insulating-member 91, the second end-heat-insulating-member 92, and the second tail-heat-insulating-member 93 cover the second connector 50 and the part of the second lower plastic member 20.

In this embodiment, the first side-heat-insulating-member 81 covers the first inner-side-surface 422 of the first transition portion 42 and the first inner-curved-surface 432 of the first bending portion 43. The first side-heat-insulating-member 81 is configured to separate both the first transition portion 42 and the first bending portion 43 from the electrode-assembly body 310, so as to avoid defects such as thermal shrinkage, melting-through, and damage of the separator that are caused by contact between both the first transition portion 42 and the first bending portion 43 and the separator between the positive electrode sheet and the negative electrode sheet in the electrode-assembly body 310, and to avoid direct contact between the positive electrode sheet and the negative electrode sheet, thereby avoiding a short circuit of the electrode assembly. The length and width of the first side-heat-insulating-member 81 can also be determined according to the actual application situations, which is not strictly limited in the present disclosure.

In this embodiment, the first end-heat-insulating-member 82 covers the first inner surface 412 of the first connecting portion 41 and the first inner-curved-surface 432 of the first bending portion 43. The first end-heat-insulating-member 82 is configured to separate both the first bending portion 43 and the first connecting portion 41 from the electrode-assembly body 310. The length and width of the first end-heat-insulating-member 82 can also be determined according to the actual application situations, which is not strictly limited in the present disclosure. It can be understood that the position where the first end-heat-insulating-member 82 and the first side-heat-insulating-member 81 cover the first bending portion 43 is the thickened region.

The first end-heat-insulating-member 82 not only covers the first inner surface 412 of the first connecting portion 41, but also covers at least a part of the first boss-face 131 around the first connecting portion 41, and an edge of the first end-heat-insulating-member 82 that is away from the first side-heat-insulating-member 81 is adhered to the first protrusion-side-surface 162. Therefore, the contact area between the first end-heat-insulating-member 82 and the first lower plastic member 10 is increased, the instability of the first end-heat-insulating-member 82 when the first end-heat-insulating-member 82 is impacted by the electrolyte is reduced, and the attachment effect of the first end-heat-insulating-member 82 on the first lower plastic member 10. In addition, the first protrusion-side-surface 162 also plays a role in limiting the adhesion of the first end-heat-insulating-member 82, thereby improving the adhesion efficiency of the first end-heat-insulating-member 82. In other implementations, the first end-heat-insulating-member 82 may abut against the first protrusion-side-surface 162 at the edge of the first end-heat-insulating-member 82 away from the first side-heat-insulating-member 81.

Meanwhile, the first end-heat-insulating-member 82 separates the first lower plastic member 10 from the electrode-assembly body 310, thereby blocking the heat conduction from the first connector 40 and the part of the first lower plastic member 10 near the first connector 40 to the electrode-assembly body 310 to the greatest extent, and further avoiding the influence of high temperature on the electrode assembly 300.

It may be noted that the first end-heat-insulating-member 82 covers the first connecting portion 41 and a gap between the first connecting portion 41 and the first assembling groove 15. Therefore, the electrolyte is prevented from penetrating and adhering to the first connecting portion 41 and the gap between the first connecting portion 41 and the first assembling groove 15, and ensuring the stability of the electrolyte.

In this embodiment, the first tail-heat-insulating-member 83 covers the first end-face 424 of the first transition portion 42 and a part of the first inner-side-surface 422 of the first transition portion 42. The first tail-heat-insulating-member 83 is configured to better separate the electrode-assembly body 310 from the first tab 320 and block the heat transfer from the first tab 320 to the electrode-assembly body 310 through the first transition portion 42. The first tail-heat-insulating-member 83 covers the first avoidance groove 44. In other implementations, the first tail-heat-insulating-member 83 may not be provided.

In other embodiments, the first side-heat-insulating-member 81 may also cover a part of the first inner surface 412 of the first connecting portion 41, and at the same time, the first end-heat-insulating-member 82 may also cover a part of the first inner-side-surface 422 of the first transition portion 42. Therefore, the overlapping region of the first side-heat-insulating-member 81 and the first end-heat-insulating-member 82 may also cover a part of the first transition portion 42 and a part of the first connecting portion 41 in addition to covering the first bending portion 43. It can be understood that the thickened region of the first side-heat-insulating-member 81 and the first end-heat-insulating-member 82 completely covers the first inner-curved-surface 432, and the part of the first inner-side-surface 422 and the part of the first inner surface 412 that are respectively positioned at both sides of the first inner-curved-surface 432.

In other embodiments, the first end-heat-insulating-member 82 may also cover a part of the first inner-side-surface 422 of the first transition portion 42. Thus, the overlapping region of the first side-heat-insulating-member 81 and the first end-heat-insulating-member 82 may cover a part of the first transition portion 42 in addition to covering the first bending portion 43. It can be understood that the thickened region of the first side-heat-insulating-member 81 and the first end-heat-insulating-member 82 completely covers the first inner-curved-surface 432 of the first bending portion 43 and the part of the first inner-side-surface 422 at one side of the first inner-curved-surface 432.

It may be noted that the first side-heat-insulating-member 81, the first end-heat-insulating-member 82, and the first tail-heat-insulating-member 83 may be integrally formed, or the first side-heat-insulating-member 81, the first end-heat-insulating-member 82, and the first tail-heat-insulating-member 83 may be separately formed to accommodate different requirements in actual production applications. In some embodiments, the first heat insulating member 80 includes the first end-heat-insulating-member 82 and the first side-heat-insulating-member 81. The first end-heat-insulating-member 82 and the first side-heat-insulating-member 81 are integrally formed, or the first end-heat-insulating-member 82 and the first side-heat-insulating-member 81 are separately formed. One end of the first side-heat-insulating-member 81 away from the first end-heat-insulating-member 82 extends to the first end-face 424 of the first transition portion 42, and the first side-heat-insulating-member 81 covers the first inner-side-surface 422 and at least a part of the first end-face 424, which is not strictly limited in the present disclosure.

In this embodiment, the second side-heat-insulating-member 91 covers the second inner-side-surface 522 of the second transition portion 52 and the second inner-curved-surface 532 of the second bending portion 53. The second side-heat-insulating-member 91 is configured to separate both the second transition portion 52 and the second bending portion 53 from the electrode-assembly body 310.

In this embodiment, the second end-heat-insulating-member 92 covers the second inner surface 512 of the second connecting portion 51 and the second inner-curved-surface 532 of the second bending portion 53. The second end-heat-insulating-member 92 is configured to separate the second bending portion 53 and the second connecting portion 51 from the electrode-assembly body 310. The second end-heat-insulating-member 92 not only covers the second inner surface 512 of the second connecting portion 51, but also covers and is connected to the second boss-face 231 around the second connecting portion 51, and an edge of the second end-heat-insulating-member 92 that is away from the second side-heat-insulating-member 91 is adhered to the second protrusion-side-surface 262. Therefore, the contact area between the second end-heat-insulating-member 92 and the second lower plastic member 20 is increased, the instability of the second end-heat-insulating-member 92 when the second end-heat-insulating-member 92 is impacted by the electrolyte is reduced, and the attachment effect of the second end-heat-insulating-member 92 on the second lower plastic member 20. In addition, the second protrusion-side-surface 262 also plays a role in limiting the adhesion of the second end-heat-insulating-member 92, thereby improving the adhesion efficiency of the second end-heat-insulating-member 92.

In this embodiment, the second tail-heat-insulating-member 93 covers the second end-face 524 of the second transition portion 52 and a part of the second inner-side-surface 522 of the second transition portion 52. The second tail-heat-insulating-member 93 is configured to better separate the electrode-assembly body 310 from the second tab 330 and block the heat transfer from the second tab 330 to the electrode-assembly body 310 through the second transition portion 52. The second tail-heat-insulating member 93 covers the second avoidance groove 54. In other implementations, the second tail-heat-insulating-member 93 may not be provided.

It can be understood that the manner in which the second side-heat-insulating-member 91 is connected to the second end-heat-insulating-member 92, as well as the manner in which the second side-heat-insulating-member 91 and the second end-heat-insulating-member 92 are connected to the second connector, can be referred to the first side-heat-insulating-member 81 and the first end-heat-insulating-member 82, and will not be described in detail here. The assembly relationship among the end cover assembly in this embodiment, the electrode assembly 300, and the housing can also be referred to the assembly manner of the first embodiment, and will not be described in detail here.

The above descriptions are merely some embodiments and implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An end cover assembly (100), comprising a lower plastic member (10, 20), a connector (40, 50), and a heat insulating member (80, 90), wherein the lower plastic member (10, 20) comprises a body (11, 21), the body (11, 21) has a top face (111, 211) and a bottom face (112, 212), and the top face (111, 211) and the bottom face (112, 212) are positioned facing away from each other in a thickness direction of the body (11, 21);
the lower plastic member (10, 20) further defines an assembling groove (15, 25), the assembling groove (15, 25) is recessed from the bottom face (112, 212) of the body (11, 21) and is positioned at an end of the lower plastic member (10, 20) in a length direction of the lower plastic member (10, 20), the assembling groove (15, 25) has a groove bottom face (151, 251), and the groove bottom face (151, 251) and the bottom face (112, 212) have identical orientations;
the connector (40, 50) comprises a connecting portion (41, 51), a transition portion (42, 52), and a bending portion (43. 53) connected between the connecting portion (41, 51) and the transition portion (42, 52), and an extending direction of the connecting portion (41, 51) and an extending direction of the transition portion (42, 52) define an angle therebetween; the connecting portion (41, 51) has an outer surface (411, 511) and an inner surface (412, 512), and the inner surface (412, 512) and the outer surface (411, 511) are positioned facing away from each other in a thickness direction of the connecting portion (41, 51); the transition portion (42, 52) has an inner side surface (422, 522) and an outer side surface (421, 521), and the inner side surface (422, 522) and the outer side surface (421, 521) are positioned facing away from each other in a thickness direction of the transition portion (42, 52); and the outer side surface (421, 521) has a welding region;
the heat insulating member (80, 90) comprises a side heat-insulating-member (81, 91) and an end heat-insulating-member (82, 92); and
the connecting portion (41, 51) is accommodated in the assembling groove (15, 25), the transition portion (42, 52) extends in a direction away from the lower plastic member (10, 20), the outer surface (411, 511) is connected to the groove bottom face (151, 251), and the inner surface (412, 512) is positioned facing away from the groove bottom face (151, 251); the heat insulating member (80, 90) is disposed at the connector (40, 50), the side heat-insulating-member (81, 91) covers the inner side surface (422, 522), the end heat-insulating-member (82, 92) covers the inner surface (412, 512), and an orthographic projection of the welding region is completely positioned in the side heat-insulating-member (81, 91) in the thickness direction of the transition portion (42, 52).

2. The end cover assembly (100) of claim 1, wherein the body (11, 21) is provided with a boss (13, 23) protruding from the bottom face (112, 212) of the body (11, 21), the boss (13, 23) has a boss face (131, 231) positioned facing away from the bottom face (112, 212), the assembling groove (15, 25) is recessed from the boss face (131, 231), and the end heat-insulating-member (82, 92) covers at least part of the boss face (131, 231).

3. The end cover assembly (100) of claim 2, wherein the lower plastic member (10, 20) is provided with a protrusion (16, 26) protruding from the bottom face (112, 212) of the body (11, 21) of the lower plastic member (10, 20), the protrusion (16, 26) is adjacent to the boss (13, 23) in the length direction of the lower plastic member (10, 20), the protrusion (16, 26) has a protrusion side surface (162, 262), the protrusion side surface (162, 262) is positioned facing towards the boss (13, 23), the protrusion (16, 26) exceeds the boss face (131, 231), and in the length direction of the lower plastic member (10, 20), an orthographic projection of the side heat-insulating-member (81, 91) towards the protrusion side surface (162, 262) is partially positioned on the protrusion side surface (162, 262).

4. The end cover assembly (100) of claim 3, wherein the protrusion side surface (162, 262) and the boss face (131, 231) are connected to each other and define an angle therebetween, and the end heat-insulating-member (82, 92) abuts against the protrusion side surface (162, 262) at an edge of the end heat-insulating-member (82, 92) away from the transition portion (42, 52).

5. The end cover assembly (100) of claim 1, wherein the transition portion (42, 52) further has two side surfaces (425, 525), the two side surfaces (425, 525) are positioned facing away from each other in a width direction of the transition portion (42, 52), each of the two side surfaces (425, 525) is connected between the outer side surface (421, 521) and the inner side surface (422, 522); the transition portion (42, 52) defines an anti-slip groove (45, 55) on at least one of the two side surfaces (425, 525), and the anti-slip groove (45, 55) extends through the outer side surface (421, 521) and the inner side surface (422, 522); and an orthographic projection of the anti-slip groove (45, 55) in the thickness direction of the transition portion (42, 52) is at least partially positioned on the side heat-insulating-member (81, 91).

6. The end cover assembly (100) of claim 5, wherein the anti-slip groove (45, 55) is implemented as a plurality of anti-slip grooves (45, 55), the plurality of anti-slip grooves (45, 55) are distributed on each of the two side surfaces (425, 525), and in a length direction of the transition portion (42, 52), the plurality of anti-slip grooves (45, 55) defined on each of the two side surfaces (425, 525) are defined at intervals; and
the plurality of anti-slip grooves (45, 55) on each of the two side surfaces (425, 525) are distributed at both ends of the transition portion (42, 52) in the length direction of the transition portion (42, 52), and the plurality of anti-slip grooves (45, 55) on one of the two side surfaces (425, 525) and the plurality of anti-slip grooves (45, 55) on the other of the two side surfaces (425, 525) are symmetrical about a central axis extending in the length direction of the transition portion (42, 52).

7. The end cover assembly (100) of claim 5, wherein in the width direction of the transition portion (42, 52), a groove depth of the anti-slip groove (45, 55) is greater than or equal to 0.05 mm and less than or equal to 3 mm.

8. The end cover assembly (100) of claim 1, wherein the transition portion (42, 52) further has a guide face (423, 523) and an end face (424, 524), the guide face (423, 523) is connected between the inner side surface (422, 522) and the end face (424, 524), the guide face (423, 523) is inclined towards the end face (424, 524), and the end face (424, 524) is positioned away from the connecting portion (41, 51); and
the transition portion (42, 52) further defines an avoidance groove (44, 54), the avoidance groove (44, 54) is recessed from the guide face (423, 523) and the inner side surface (422, 522), the avoidance groove (44, 54) has a trapezoidal groove bottom wall (441, 541) connected to the guide face (423, 523); and an edge of the side heat-insulating-member (81, 91) away from the connecting portion (41, 51) is positioned at one side of the avoidance groove (44, 54) positioned facing away from the end face (424, 524).

9. The end cover assembly (100) of any one of claims 1 to 8, wherein the side heat-insulating-member (81, 91) comprises a heat-insulating base layer and an adhesive layer, the heat-insulating base layer comprises a first heat-insulating section and a second heat-insulating section connected to the first heat-insulating section, the first heat-insulating section and the second heat-insulating section are distributed in a length direction of the side heat-insulating-member (81, 91), the adhesive layer is completely stacked on a surface of the first heat-insulating section in a thickness direction of the first heat-insulating section, and the second heat-insulating section is not provided with the adhesive layer; and
the side heat-insulating-member (81, 91) is connected to the transition portion (42, 52), the first heat-insulating section is connected to the inner side surface (422, 522) through the adhesive layer, the second heat-insulating section covers a surface of the bending portion (43. 53), and the second heat-insulating section extends to the connecting portion (41, 51) and overlaps with a part of the end heat-insulating-member (82, 92).

10. The end cover assembly (100) of claim 9, wherein the second heat-insulating section extends to the connecting portion (41, 51) and covers the part of the end heat-insulating-member (82, 92).

11. The end cover assembly (100) of claim 9, wherein the side heat-insulating-member (81, 91) is provided with an indentation (813, 913), the indentation (813, 913) extends in a width direction of the side heat-insulating-member (81, 91), and the indentation (813, 913) is positioned at one end of the second heat-insulating section close to the first heat-insulating section.

12. The end cover assembly (100) of any one of claims 1 to 8, wherein the end heat-insulating-member (82, 92) is connected to the side heat-insulating-member (81, 91), the end heat-insulating-member (82, 92) and the side heat-insulating-member (81, 91) overlap, and an overlapping part of the end heat-insulating-member (82, 92) and the side heat-insulating-member (81, 91) covers the bending portion (43. 53); or
the side heat-insulating-member (81, 91) further covers a part of the inner surface (412, 512), and the end heat-insulating-member (82, 92) further covers a part of the inner side surface (422, 522).

13. An energy storage apparatus (1000), comprising a housing (200), an electrode assembly (300), and the end cover assembly (100) of any one of claims 1 to 12, wherein the housing (200) defines an opening (201), the electrode assembly (300) is mounted in the housing (200), the electrode assembly (300) comprises an electrode-assembly body (310) and a tab (320, 330), the electrode-assembly body (310) has a side surface (311, 312) and a top surface (313) connected to the side surface (311, 312), the tab (320, 330) is led out from the side surface (311, 312) and is electrically connected to the electrode-assembly body (310), the end cover assembly (100) seals the opening (201), the bottom face (112, 212) is positioned facing towards the top surface (313), and the transition portion (42, 52) is stacked on and is electrically connected to the tab (320, 330); wherein a welding mark between the transition portion (42, 52) and the tab (320, 330) is positioned in the welding region, and the heat insulating member (80, 90) is positioned facing towards the electrode-assembly body (310) at one side of the heat insulating member (80, 90) positioned facing away from the connector (40, 50).

14. The energy storage apparatus (1000) of claim 13, wherein the tab (320, 330) is bent and covers two side surfaces (425, 525) of the transition portion (42, 52), and when the transition portion (42, 52) defines a plurality of anti-slip grooves (45, 55) on each of the two side surfaces (425, 525) of the transition portion (42, 52), in a thickness direction of the transition portion (42, 52), orthographic projections of at least some of the plurality of anti-slip grooves (45, 55) towards the tab (320, 330) are positioned on the tab (320, 330).

15. An electricity-consumption device, comprising the energy storage apparatus (1000) of claim 13 or 14, wherein the energy storage apparatus (1000) is configured to power the electricity-consumption device.
